(19) Europäisches Patentamt
European Patent Office
Office européen des brevets

(11) **EP 4 564 723 A1**

(12) **EUROPEAN PATENT APPLICATION**
published in accordance with Art. 153(4) EPC

(43) Date of publication:
**04.06.2025 Bulletin 2025/23**

(21) Application number: 23847056.1

(22) Date of filing: **31.07.2023**

(51) International Patent Classification (IPC):
*H04L 5/00* (2006.01)       *H04L 1/08* (2006.01)
*H04W 72/04* (2023.01)      *H04W 72/23* (2023.01)
*H04L 5/14* (2006.01)       *H04B 7/0413* (2017.01)

(52) Cooperative Patent Classification (CPC):
H04B 7/0413; H04L 1/08; H04L 5/00; H04L 5/14;
H04W 72/04; H04W 72/23

(86) International application number:
**PCT/KR2023/011130**

(87) International publication number:
**WO 2024/025400 (01.02.2024 Gazette 2024/05)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.07.2022 KR 20220094514**

(71) Applicant: **LG Electronics Inc.**
**Yeongdeungpo-gu**
**Seoul 07336 (KR)**

(72) Inventors:
• **GO, Seongwon**
  **Seoul 06772 (KR)**
• **YANG, Suckchel**
  **Seoul 06772 (KR)**
• **KANG, Jiwon**
  **Seoul 06772 (KR)**

(74) Representative: **Mooser, Sebastian Thomas**
**Wuesthoff & Wuesthoff**
**Patentanwälte und Rechtsanwalt PartG mbB**
**Schweigerstraße 2**
**81541 München (DE)**

(54) **METHOD FOR TRANSMITTING AND RECEIVING SOUNDING REFERENCE SIGNAL IN WIRELESS COMMUNICATION SYSTEM, AND APPARATUS THEREFOR**

(57)    A method performed by a terminal in a wireless communication system, according to an embodiment of the present specification, comprises the steps of: receiving configuration information related to a sounding reference signal (SRS), wherein the configuration information comprises information on at least one SRS resource set; and transmitting the SRS on the basis of the at least one SRS resource set. The at least one SRS resource set comprises one or more SRS resources. The SRS resources are characterized in that each SRS resource is related to one or more TCI-states or one or more spatial relation configurations.

【FIG. 5】

```
            Start
              │
              ▼
┌──────────────────────────────────┐
│ Receive configuration information │──── S510
└──────────────────────────────────┘
              │
              ▼
┌──────────────────────────────────┐
│           Transmit SRS            │──── S520
└──────────────────────────────────┘
              │
              ▼
            End
```

**Description**

[TECHNICAL FIELD]

The present disclosure relates to a method for transmitting and receiving a sounding reference signal in a wireless communication system, and an apparatus therefor.

[BACKGROUND]

Mobile communication systems have been developed to guarantee user activity while providing voice services. Mobile communication systems are expanding their services from voice only to data. Current soaring data traffic is depleting resources and users' demand for higher-data rate services is leading to the need for more advanced mobile communication systems.

Next-generation mobile communication systems are required to meet, e.g., handling of explosively increasing data traffic, significant increase in per-user transmission rate, working with a great number of connecting devices, and support for very low end-to-end latency and high-energy efficiency. To that end, various research efforts are underway for various technologies,, such as dual connectivity, massive multiple input multiple output (MIMO), in-band full duplex, non-orthogonal multiple access (NOMA), super wideband support, and device networking.

Rel-18 MIMO SRS enhancement supports multiple TRPs (e.g., 4 TRPs) for a usage of coordinated joint transmission (CJT). As the number of TRPs increases (antenna switching for a usage of DL CSI acquisition), SRS transmissions increase.

[DISCLOSURE]

[TECHNICAL PROBLEM]

As described above, SRS transmissions may be increased in order to support transmission to multiple TRPs for a CJT usage. At this time, when SRS resources corresponding to each TRP are configured separately/additionally, a number of SRS resources may increase excessively.

An object of the present disclosure is to propose a method for supporting SRS transmissions related to multiple TRPs for the CJT usage without configuring additional SRS resources.

The technical objects of the present disclosure are not limited to the aforementioned technical objects, and other technical objects, which are not mentioned above, will be apparently appreciated by a person having ordinary skill in the art from the following description.

[TECHNICAL SOLUTION]

A method performed by a user equipment in a wireless communication system according to an embodiment of the present disclosure comprises receiving configuration information related to a sounding reference signal (SRS), the configuration information including information on at least one SRS resource set, and transmitting the SRS based on the at least one SRS resource set.

The at least one SRS resource set includes one or more SRS resources.

Each SRS resource is related to one or more TCI-states or one or more spatial relation configurations.

A reference RS for an uplink transmission (UL Tx) spatial filter related to the SRS may be based on i) the one or more TCI-states or ii) the one or more spatial relation configurations.

A time domain behavior based on a resource type related to the at least one SRS resource set may be periodic or semi-persistent.

The TCI-state or spatial relation configuration related to the reference RS may be changed based on a periodicity of each SRS resource.

The SRS may be transmitted in one or more slots based on the periodicity. The one or more slots may include i) at least one first slot and ii) at least one second slot. The at least one second slot may be based on a slot after slots based on the periodicity from the at least one first slot.

A TCI-state or a spatial relation configuration related to the at least one first slot may be different from a TCI-state or a spatial relation configuration related to the at least one second slot.

The method may further comprise receiving downlink control information (DCI) related to the SRS.

The time domain behavior based on a resource type related to the at least one SRS resource set may be aperiodic.

A TCI-state or a spatial relation configuration related to the reference RS may be changed each time the SRS is triggered based on the DCI.

One or more slots for transmitting the SRS may be determined based on a slot offset of the at least one SRS resource set. A TCI-state or a spatial relation configuration related to the reference RS is changed based on the one or more slots.

The TCI-state or the spatial relation configuration related to the reference RS may be changed for each slot among the one or more slots. A number of the one or more slots may be determined based on a number of the one or more TCI-states or a number of the one or more spatial relation configurations.

The TCI-state or the spatial relation configuration related to the reference RS may be changed based on an index of each slot among the one or more slots. The index of each slot may be associated with i) one of the one or more TCI-states or ii) one of the one or more spatial relation configurations.

The least one SRS resource set may include two SRS resource sets triggered based on the DCI.

The DCI may include i) a first SRS resource indicator field and ii) a second SRS resource indicator. A first SRS resource of a first SRS resource set may be indicated based on the first resource indicator field, and a second SRS resource of a second SRS resource set may be indicated based on the second resource indicator field. The DCI may include a 1 bit field. The first resource set and the second resource set corresponding to two SRS resource sets may be triggered based on the 1 bit field.

For the first SRS resource set, the SRS may be transmitted based on a TCI-state or a spatial relation configuration configured in the first SRS resource. For the second SRS resource set, the SRS may be transmitted based on a TCI-state or a spatial relation configuration configured in the second SRS resource.

The DCI may include an SRS request field. Two SRS resource sets may be triggered based on a codepoint of the SRS request field. The codepoint may be a codepoint to which two SRS resource sets are mapped among codepoints of the SRS request field.

The DCI may include i) a first SRS resource indicator field and ii) a second SRS resource indicator.

A first SRS resource of a first SRS resource set may be indicated based on the first resource indicator field. A second SRS resource of a second SRS resource set may be indicated based on the second resource indicator field.

For a 1st SRS resource set mapped to the codepoint, the SRS may be transmitted based on the TCI-state or spatial relation configuration configured in the first SRS resource.

For a 2nd SRS resource set mapped to the codepoint, the SRS may be transmitted based on the TCI-state or spatial relation configuration configured in the second SRS resource.

The DCI may include a transmission configuration indication (TCI) field. Two TCI states may be indicated based on the TCI field. For a 1st SRS resource set mapped to the codepoint, the SRS may be transmitted based on a first TCI state. For a 2nd SRS resource set mapped to the codepoint, the SRS is transmitted based on a second TCI state.

The method may further comprise receiving a medium access control-control element (MAC CE). The MAC CE may include at least one field related to each SRS resource of the at least one SRS resource set.

The at least one field may be related to i) the one or more TCI-states among candidate TCI-states or ii) the one or more spatial relation configurations among candidate spatial relation configurations.

Based on the reference RS being determined by i) a specific TCI-state among the one or more TCI-states or ii) a specific spatial relation configuration among the one or more spatial relation configurations, the SRS may be transmitted based on a second number of symbols and/or a second repetition factor which have larger values than a first number of second symbols and/or a first repetition factor configured in a SRS resource related to the reference RS.

A usage of the at least one SRS resource set may be set to an antenna switching, a codebook, a non-codebook, or a beam management.

The at least one SRS resource set may be related to one or more parameter sets.

A number of the one or more parameter sets may be same as a number of the one or more TCI states or ii) a number of the one or more spatial relation configurations.

Power control parameters for determining transmission power of the SRS are based on one of the one or more parameter sets.

A parameter set related to the power control parameters may be changed based on i) a periodicity related to transmission of the SRS or ii) a change of a TCI-state or a spatial relation configuration related to the reference RS.

A user equipment operating in a wireless communication system according to another embodiment of the present disclosure comprises one or more transceivers, one or more processors, and one or more memories operably connectable to the one or more processors, and storing instructions of configuring the one or more processors to perform operations when being executed by the one or more processors.

The operations comprise receiving configuration information related to a sounding reference signal (SRS), the configuration information including information on at least one SRS resource set, and transmitting the SRS based on the at least one SRS resource set.

The at least one SRS resource set includes one or more SRS resources.

Each SRS resource is related to one or more TCI-states or one or more spatial relation configurations.

An apparatus according to another embodiment of the present disclosure comprises one or more memories and one or more processors functionally connected to the one or more memories.

The one or more memories include instructions of configuring the one or more processors to perform operations when being executed by the one or more processors.

The operations comprise receiving configuration information related to a sounding reference signal (SRS), the configuration information including information on at least one SRS resource set, and transmitting the SRS based on the at least one SRS resource set.

The at least one SRS resource set includes one or more SRS resources.

Each SRS resource is related to one or more TCI-states or one or more spatial relation configurations.

One or more non-transitory computer-readable media according to another embodiment of the present disclosure store one or more instructions.

One or more constructions executable by one or more processors are configured to allow the one or more processors to perform operations.

The operations comprise receiving configuration information related to a sounding reference signal (SRS), the configuration information including information on at least one SRS resource set, and transmitting the SRS based on the at least one SRS resource set.

The at least one SRS resource set includes one or more SRS resources.

Each SRS resource is related to one or more TCI-states or one or more spatial relation configurations.

A method performed by a base station in a wireless communication system according to another embodiment of the present disclosure comprises transmitting configuration information related to a sounding reference signal (SRS), the configuration information including information on at least one SRS resource set, and receiving the SRS based on the at least one SRS resource set.

The at least one SRS resource set includes one or more SRS resources.

Each SRS resource is related to one or more TCI-states or one or more spatial relation configurations.

A base station operating in a wireless communication system according to another embodiment of the present disclosure comprises one or more transceivers, one or more processors, and one or more memories operably connectable to the one or more processors, and storing instructions of configuring the one or more processors to perform operations when being executed by the one or more processors.

The operations comprise transmitting configuration information related to a sounding reference signal (SRS), the configuration information including information on at least one SRS resource set, and receiving the SRS based on the at least one SRS resource set.

The at least one SRS resource set includes one or more SRS resources.

Each SRS resource is related to one or more TCI-states or one or more spatial relation configurations.

[ADVANTAGEOUS EFFECTS]

According to an embodiment of the present disclosure, each the SRS resource may be related to one or more TCI-states or one or more spatial relation configurations.

SRS transmission for each TRP can be performed without increasing the number of SRS resources. Therefore, UL resource utilization can be improved in SRS transmission for DL CSI acquisition of multiple TRPs (4 TRPs).

In addition, since each TRP-related SRS resource is not newly defined/configured, the implementation complexity required to support SRS transmission for CJT-related TRPs can be minimized.

Advantages which can be obtained in the present disclosure are not limited to the aforementioned effects and other unmentioned effects will be clearly understood by those skilled in the art from the following description.

[BRIEF DESCRIPTION OF THE DRAWINGS]

FIG. 1 is a flowchart showing an example of a UL BM procedure using an SRS.

FIG. 2 illustrates an example of a transmission/reception method for reliability enhancement using transmission in multiple TRPs.

FIG. 3 is a diagram illustrating flexible aperiodic SRS transmission timing control.

FIG. 4 is a diagram illustrating partial band SRS transmission.

FIG. 5 is a flowchart for describing a method performed by a user equipment according to an embodiment of the present disclosure.

FIG. 6 is a flowchart for describing a method performed by a BS according to another embodiment of the present disclosure.

FIG. 7 is a diagram illustrating configurations of a first apparatus and a second apparatus according to an embodiment of the present disclosure.

[DETAILED DESCRIPTION]

Hereinafter, preferred embodiments of the disclosure are described in detail with reference to the accompanying drawings. The following detailed description taken in conjunction with the accompanying drawings is intended for describing embodiments of the disclosure, but not for representing a sole embodiment of the disclosure. The detailed description below includes specific details to convey a thorough understanding of the disclosure. However, it will be easily appreciated by one of ordinary skill in the art that embodiments of the disclosure may be practiced even without such details.

In some cases, to avoid ambiguity in concept, known structures or devices may be omitted or be shown in block diagrams while focusing on core features of each structure and device.

Hereinafter, downlink (DL) means communication from a base station to a terminal and uplink (UL) means communication from the terminal to the base station. In the downlink, a transmitter may be part of the base station, and a receiver may be part of the terminal. In the uplink, the transmitter may be part of the terminal and the receiver may be part of the base station. The base station may be expressed as a first communication device and the terminal may be expressed as a second communication device. A base station (BS) may be replaced with terms including a fixed station, a Node B, an evolved-NodeB (eNB), a Next Generation NodeB (gNB), a base transceiver system (BTS), an access point (AP), a network (5G network), an AI system, a road side unit (RSU), a vehicle, a robot, an Unmanned Aerial Vehicle (UAV), an Augmented Reality (AR) device, a Virtual Reality (VR) device, and the like. Further, the terminal may be fixed or mobile and may be replaced with terms including a User Equipment (UE), a Mobile Station (MS), a user terminal (UT), a Mobile Subscriber Station (MSS), a Subscriber Station (SS), an Advanced Mobile Station (AMS), a Wireless Terminal (WT), a Machine-Type Communication (MTC) device, a Machine-to-Machine (M2M) device, and a Device-to-Device (D2D) device, the vehicle, the robot, an AI module, the Unmanned Aerial Vehicle (UAV), the Augmented Reality (AR) device, the Virtual Reality (VR) device, and the like.

SRS related operation

The UE may be configured with one or more Sounding Reference Symbol (SRS) resource sets configured by (higher layer parameter) SRS-ResourceSet (through higher layer signaling, RRC signaling, etc.). For each SRS resource set, the UE may be configured with K ($\geq$ 1) SRS resources (higher later parameter SRS-resources). Here, K is a natural number and a maximum value of K is indicated by SRS_capability.

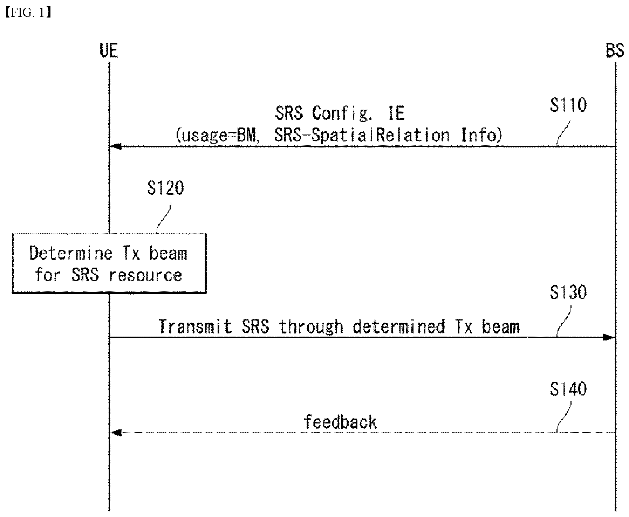

FIG. 1 is a flowchart showing an example of a UL BM procedure using an SRS.

-     The UE receives, from the BS, RRC signaling (e.g., SRS-Config IE) including a usage parameter (S110). As an example, the usage parameter may be configured as 'beam management', 'codebook', 'nonCodebook', or 'antennaSwitching'.

Table 1 represents an example of SRS-Config information element (IE), and the SRS-Config IE is used for SRS transmission configuration. The SRS-Config IE contains a list of SRS-Resources and a list of SRS-Resource sets. Each SRS resource set means a set of SRS resources.

The network may trigger transmission of the SRS resource set using configured aperiodicSRS-ResourceTrigger (L1 DCI).

【Table 1】

```
-- ASN1START
-- TAG-MAC-CELL-GROUP-CONFIG-START

SRS-Config ::=                                          SEQUENCE {
        srs-ResourceSetToReleaseList                    SEQUENCE (SIZE(1..maxNrofSRS-ResourceSets))
OF SRS-ResourceSetId              OPTIONAL,      -- Need N
        srs-ResourceSetToAddModList                     SEQUENCE (SIZE(1..maxNrofSRS-ResourceSets))
OF SRS-ResourceSet                       OPTIONAL,      -- Need N


        srs-ResourceToReleaseList                       SEQUENCE (SIZE(1..maxNrofSRS-Resources)) OF
SRS-ResourceId                           OPTIONAL,      -- Need N
        srs-ResourceToAddModList                        SEQUENCE (SIZE(1..maxNrofSRS-Resources)) OF
SRS-Resource                             OPTIONAL,      -- Need N


        tpc-Accumulation                                ENUMERATED {disabled}


        OPTIONAL,        -- Need S
        ...
}


SRS-ResourceSet ::=           SEQUENCE {
   srs-ResourceSetId          SRS-ResourceSetId,
   srs-ResourceIdList         SEQUENCE (SIZE(1..maxNrofSRS-ResourcesPerSet)) OF SRS-ResourceId
OPTIONAL, -- Cond Setup
   resourceType               CHOICE {
      aperiodic               SEQUENCE {
```

```
    aperiodicSRS-ResourceTrigger        INTEGER (1..maxNrofSRS-TriggerStates-1),
    csi-RS                    NZP-CSI-RS-ResourceId                      OPTIONAL, -- Cond
NonCodebook
    slotOffset                INTEGER (1..32)                           OPTIONAL, -- Need S
    ...,
    [[
    aperiodicSRS-ResourceTriggerList      SEQUENCE (SIZE(1..maxNrofSRS-TriggerStates-2))
                            OF INTEGER (1..maxNrofSRS-TriggerStates-1)  OPTIONAL  -- Need M
    ]]
    },
    semi-persistent           SEQUENCE {
        associatedCSI-RS            NZP-CSI-RS-ResourceId                OPTIONAL, -- Cond
NonCodebook
        ...
    },
    periodic                  SEQUENCE {
        associatedCSI-RS            NZP-CSI-RS-ResourceId                OPTIONAL, -- Cond
NonCodebook
        ...
    }
    },
    usage                     ENUMERATED {beamManagement, codebook, nonCodebook, antennaSwitching},
    alpha                     Alpha                                     OPTIONAL, -- Need S
    p0                    INTEGER (-202..24)                            OPTIONAL, -- Cond Setup
```

```
    pathlossReferenceRS            PathlossReferenceRS-Config                        OPTIONAL, -- Need
M

    srs-PowerControlAdjustmentStates        ENUMERATED { sameAsFci2, separateClosedLoop}
OPTIONAL, -- Need S

    ...,
    [[
    pathlossReferenceRSList-r16        SetupRelease { PathlossReferenceRSList-r16}
OPTIONAL  -- Need M
    ]]
}


PathlossReferenceRS-Config ::=        CHOICE {
    ssb-Index                  SSB-Index,
    csi-RS-Index                NZP-CSI-RS-ResourceId
}
SRS-PosResourceSet-r16 ::=            SEQUENCE {
    srs-PosResourceSetId-r16            SRS-PosResourceSetId-r16,
    srs-PosResourceIdList-r16            SEQUENCE (SIZE(1..maxNrofSRS-ResourcesPerSet)) OF SRS-
PosResourceId-r16
```

```
                                                                OPTIONAL, -- Cond Setup
    resourceType-r16                CHOICE {
        aperiodic-r16               SEQUENCE {
            aperiodicSRS-ResourceTriggerList-r16    SEQUENCE (SIZE(1..maxNrofSRS-TriggerStates-1))
                                    OF INTEGER (1..maxNrofSRS-TriggerStates-1)        OPTIONAL, -- Need
M
            ...
        },
        semi-persistent-r16         SEQUENCE {
            ...
        },
        periodic-r16                SEQUENCE {
            ...
        }
    },
    alpha-r16                       Alpha                       OPTIONAL, -- Need S
    p0-r16                          INTEGER (-202..24)              OPTIONAL, -- Cond Setup
    pathlossReferenceRS-Pos-r16         CHOICE {
        ssb-IndexServing-r16            SSB-Index,
        ssb-Ncell-r16                   SSB-InfoNcell-r16,
        dl-PRS-r16                      DL-PRS-Info-r16
    }                                                   OPTIONAL, -- Need M
    ...
}


SRS-SpatialRelationInfo ::=         SEQUENCE {
        servingCellId                               ServCellIndex
                                    OPTIONAL,       -- Need S
        referenceSignal                             CHOICE {
            ssb-Index                                   SSB-Index,
            csi-RS-Index                                NZP-CSI-RS-ResourceId,
            srs                                         SEQUENCE
{
                resourceId                              SRS-
ResourceId,
                uplinkBWP                               BWP-Id
            }
```

```
            }
    }


SRS-SpatialRelationInfoPos-r16 ::=      CHOICE {
    servingRS-r16                  SEQUENCE {
        servingCellId              ServCellIndex                    OPTIONAL,   -- Need S
```

```
        referenceSignal-r16          CHOICE {
            ssb-IndexServing-r16          SSB-Index,
            csi-RS-IndexServing-r16          NZP-CSI-RS-ResourceId,
            srs-SpatialRelation-r16          SEQUENCE {
                resourceSelection-r16          CHOICE {
                    srs-ResourceId-r16             SRS-ResourceId,
                    srs-PosResourceId-r16             SRS-PosResourceId-r16
                },
                uplinkBWP-r16              BWP-Id
            }
        }
    },
    ssb-Ncell-r16              SSB-InfoNcell-r16,
    dl-PRS-r16                DL-PRS-Info-r16
}


SRS-ResourceId ::=                                    INTEGER (0..maxNrofSRS-Resources-1)
```

In Table 1, usage refers to a higher layer parameter to indicate whether the SRS resource set is used for beam management or is used for codebook based or non-codebook based transmission. 'spatialRelationInfo' is a parameter representing a configuration of spatial relation between a reference RS and a target SRS. The reference RS may be SSB, CSI-RS, or SRS which corresponds to L1 parameter 'SRS-SpatialRelationInfo' . The usage is configured per SRS resource set.

- The UE determines the Tx beam for the SRS resource to be transmitted based on SRS-SpatialRelation Info contained in the SRS-Config IE in S120. The SRS-SpatialRelation Info is configured per SRS resource and indicates whether to apply the same beam as the beam used for SSB, CSI-RS, or SRS per SRS resource. Further, SRS-SpatialRelationInfo may be configured or not configured in each SRS resource.
- If the SRS-SpatialRelationInfo is configured in the SRS resource, the same beam as the beam used for SSB, CSI-RS or SRS is applied for transmission. However, if the SRS-SpatialRelationInfo is not configured in the SRS resource, the UE randomly determines the Tx beam and transmits the SRS via the determined Tx beam in S130.
- Additionally, the UE may receive or not receive a feedback for the SRS from the BS (S140).

At least one of the operations of the UE/BS based on S110 to S140 described above may be applied in combination with the embodiments related to the Rel-18 SRS enhancement described below (e.g., at least one of Proposal 1, Proposal 2, Proposal 2-1, Proposal 2-2, Proposal 2-3, Proposal 2-4, and/or Proposal 2-5).
Hereinafter, M-TRP-related operations to which the method proposed in the present disclosure may be applied will be examined.

**Multi-Transmission/Reception Point (TRP) related operation**

The BS described in the present disclosure may be a general term for an object that performs data transmission and reception with the UE. For example, the BS described in the present disclosure may be a concept including one or more transmission points (TPs), one or more transmission and reception points (TRPs), etc. For example, the multiple TPs and/or multiple TRPs described herein may be included in a single BS or may be included in multiple BSs. Further, the TP and/or TRP may include a panel of the BS, a transmission and reception unit, etc.

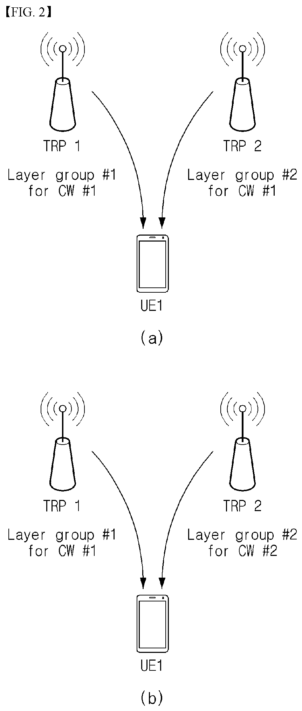

FIG. 2 illustrates an example of a transmission/reception method for improving reliability using transmission in multiple TRPs.

The example in (a) of FIG. 2 shows that a layer group transmitting the same codeword (CW)/transport block (TB) correspond to different TRPs. That is, the same CW may be transmitted through different layers/layer groups. The example in (b) of FIG. 2 shows an example in which different CWs are transmitted through layer groups corresponding to different TRPs. That is, different CWs may be transmitted through different layers/layer groups.

### <MTRP URLLC related operation>

Hereinafter, in the methods proposed in the present disclosure, DL MTRP-URLLC means that multiple TRPs transmit the same data/DCI using multiple TRPs by using different layer/time/frequency resources. UL MTRP-URLLC means that multiple TRPs receive the same data/UCI from one UE using different layer/time/frequency resources.

A case where the UE uses (maps) a specific TCI state (or TCI) when receiving data/DCI for a certain frequency/time/spatial resource may mean that the UE estimates a channel from a DMRS using a QCL type and a QCL RS indicated by the TCI state in the frequency/time/spatial resource, and receives/demodulates the data/DCI with the estimated channel.

A case where the UE uses (maps) a specific TCI state (or TCI) when receiving data/UCI for a certain frequency/time/spatial resource may mean that the UE estimates a channel from a DMRS using a Tx beam and/or Tx power indicated by the TCI state in the frequency/time/spatial resource, and transmits/modulates the DMRS and the data/UCI with the estimated channel.

The UL TCI state includes Tx beam and/or Tx power information of the UE. The UL TCI state may be directly indicated via UL grant DCI. The UL TCI state may be based on srs-UL-TCI-State (TCI-UL-StateId) configured in the SRS resource indicated through the SRI field of the UL grant DCI.

The UL TCI state may include information associated with one or more power control parameters. The one or more power control parameters may be related to at least one of i) p0, ii) alpha, iii) closed loop index, and/or iv) pathlossReferenceRS.

In the present disclosure, different TRPs may be recognized as different TCI states to the UE. A case where he UE transmits the data/UCI (or receives the data/DCI) based on TCI state 1 means that the UE transmits the data/UCI to TRP1 (or receives the data/DCI from TRP 1).

### SRS enhancement in Rel-17 MIMO

The importance of UE SRS transmission for securing UL and DL channel estimation performance in an NR TDD system has increased. Accordingly, standardization was carried out in Rel-17 MIMO with the following three goals:

First, standardization was carried out with the goal of more flexibly controlling aperiodic SRS transmission according to the DL and UL slot ratios and traffic conditions of various TDD systems.

Second, an NR UE supporting DL rank 8 transmission must be equipped with at least 8 receiving antennas, but an SRS antenna change transmission technique for estimating DL channels based on channel reciprocity in the NR TDD system only supports up to a UE with up to receiving antennas-. Therefore, Rel-17 was standardized with the goal of supporting SRS antenna change transmission techniques for a UE equipped with more than four receiving antennas.

Third, standardization was carried out for the purpose of increasing the transmission coverage of the SRS and increasing the capacity of the SRS considering simultaneous access of multiple UEs.

### More flexible aperiodic SRS transmission trigger technique

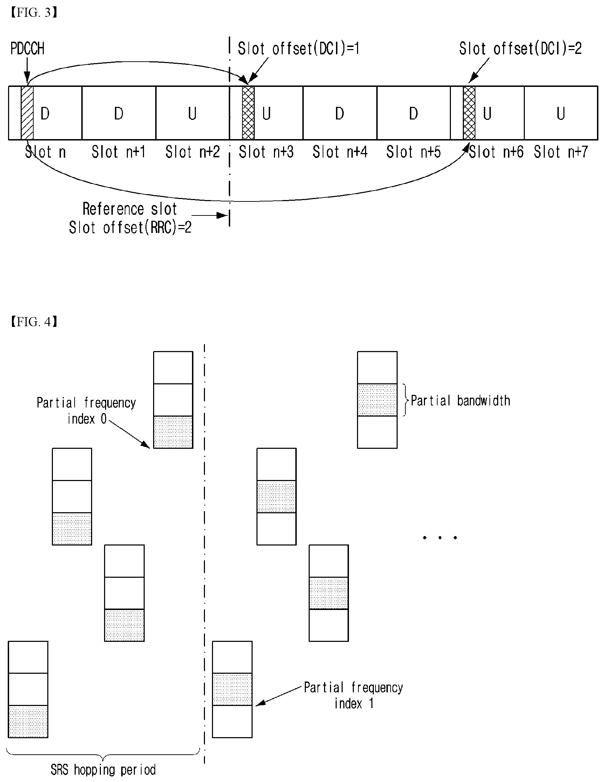

FIG. 3 is a diagram illustrating flexible aperiodic SRS transmission timing control.

In Rel-17 MIMO, two following techniques are standardized in order to more flexibly control aperiodic SRS transmission according to the DL and UL slot ratios and traffic conditions of various TDD systems.

First, a technique is introduced to dynamically control a slot offset value for an aperiodic SRS transmission trigger via the DCI. This is to solve a problem that SRS transmission may be significantly delayed depending on the DL and UL slot configurations because the existing slot offset value is fixed semi-persistently.

To this end, a new DCI field is defined that specifies one of a plurality of slot offset values set in the RRC message. In addition, the slot offset value indicated through the DCI field is standardized to be calculated based on available slots defined as slots composed of uplink slots and flexible symbols, thereby enabling flexible SRS transmission triggering with a small number of slot offset candidate values.

Second, a technique of trigger aperiodic SRS transmission without accompanying UL data transmission and CSI reporting is introduced. According to the existing scheme, in the SRS transmission, the SRS may be triggered together with the SRS through UL DCI only when PUSCH is allocated to trigger UL data and/or CSI reporting. It is difficult for the BS to estimate the UL/DL channel by triggering the SRS for the UE in a situation where there is no UL data to be transmitted and aperiodic CSI reporting is not required. This technique is intended to solve the problems described above.

SRS antenna change transmission for UE equipped with more than 4 receiving antennas

As described above, the SRS antenna change transmission technique supported in the Rel-15/16 NR system only considers the UE equipped with four receiving antennas. In Rel-17 MIMO, the SRS antenna change transmission method for UEs equipped with 6 receiving antennas and 8 receiving antennas is standardized. The extended antenna change transmission method supports the following combinations of the number of Nt transmitting antennas and the number of Nr receiving antennas.

UE with Nr = 6: Nt=1 and Nt=2, UE with Nr = 8: Nt=1, Nt=2, and Nt=4

The above SRS transmission may be transmitted within one slot, or across two or four slots.

SRS coverage and capacity enhancement technique

FIG. 4 is a diagram illustrating partial band SRS transmission.

In order to increase the coverage and capacity of the SRS in Rel-17 MIMO, three major techniques were introduced.

First, the maximum number of transmission repetitions of the SRS is increased so that the SRS may be used in a system requiring wider coverage. In Rel-15 and Rel-16, the SRS may be repeatedly transmitted in up to four symbols within one slot, except for positioning purposes. In Rel-17 MIMO, the SRS may be repeatedly transmitted in up to 14 symbols within the slot in order to secure wider SRS coverage. Specifically, it is possible to transmit the SRS in 8, 10, 12 or 14 consecutive symbols within the slot.

Second, the SRS may only be transmitted in a partial band. To this end, the BS may configure a resource block location and an SRS transmission band for starting SRS transmission to the UE. For SRS transmission, the frequency location may also be hopped or fixed according to set rules according to an SRS frequency hopping cycle. The introduction of this technique increased the capacity of SRS by allowing different UEs to transmit the SRS to the same BS simultaneously in different partial bands.

Last, an SRS having a lower frequency density is supported. Except for positioning in Rel-15/16, the frequency density of the supported SRS is 1 RE per 2 RE or 1 RE per 4 RE. Accordingly, stable channel estimation performance may be secured in a frequency selective channel environment, but there was a limit to securing the SRS capacity. Therefore, in Rel-17 MIMO, an additional transmission technique was introduced to transmit the SRS in 1 RE per 8 RE, thereby enabling further increase of the SRS capacity in a frequency non-selective channel environment.

Hereinafter, a SRS configuration method (considering C-JT M-TRP transmission) of the BS and a subsequent UE SRS transmission operation will be proposed.

In NR Rel-15 MIMO, the SRS may be used for a UL link adaptation usage (codebook/non-codebook), a beam management usage, and a DL CSI acquisition (antenna switching) usage. In Rel-17 FeMIMO, as described above, standardization has been carried out to support/introduce the following operations/configurations to enhance the coverage and the capacity of the SRS.

    i) Increase the number of repetitions
    ii) RPFS (RB-level Partial Frequency Sounding) configuration
    iii) comb value 8 configuration

SRS enhancement and coherent joint transmission (C-JT) scenarios are being considered to support PUSCHs based on up to 8 layers (up to 8 layer PUSCH) in Rel-18. According to the scenario, the SRS transmission frequency may increase depending on the TRP combination in the SRS for DL CSI acquisition. By considering this, an operation/configuration that enhances the SRS capacity and interference randomization is being considered.

Table 2 below illustrates the technical requirements considered for the SRS enhancement described above.

[Table 2]

| |
|---|
| 1. Study, and if justified, specify enhancements of CSI acquisition for Coherent-JT targeting FR1 and up to 4 TRPs, assuming ideal backhaul and synchronization as well as the same number of antenna ports across TRPs, as follows:<br>- Rel-16/17 Type-II codebook refinement for CJT mTRP targeting FDD and its associated CSI reporting, taking into account throughput-overhead trade-off<br>**- SRS enhancement to manage inter-TRP cross-SRS interference targeting TDD CJT via SRS capacity enhancement and/or interference randomization, with the constraints that 1) without consuming additional resources for SRS; 2) reuse existing SRS comb structure; 3) without new SRS root sequences**<br>- Note: the maximum number of CSI-RS ports per resource remains the same as in Rel-17, i.e. 32<br>2. Study, and if justified, specify UL DMRS, SRS, SRI, and TPMI (including codebook) enhancements to enable 8 Tx UL operation to support 4 and more layers per UE in UL targeting CPE/FWA/vehicle/Industrial devices<br>- Note: Potential restrictions on the scope of this objective (including coherence assumption, full/non-full power modes) will be identified as part of the study. |

In particular, the present disclosure proposes a method for enhancing the SRS capacity and the inference randomization by considering the C-JT M-TRP transmission. First, the vulnerabilities/problems of the existing legacy SRS configuration are described in Problem 1 and Problem 2, and then the proposed technologies for them are described in Proposal 1 and Proposal 2.

In the present disclosure, '/' means 'and' , 'or', or 'and/or' according to a context.

Problem 1: As shown in Table 2 above, there are several constraints in Rel-18 SRS enhancement, and one of the constraints is a content that additional resources for the SRS are not considered. This is to minimize the implementation complexity of the UE/BS by limiting a configuration(s) of the additional SRS resource(s) for SRS enhancement.

In addition, an antenna switching SRS configuration for a current specific UE is limited to a maximum of one SRS resource set configuration (excluding a configuration for each time domain behavior). In other words, the SRS resource set with a usage configured to antenna switching is limited to one.

Embodiments for solving the problems are described below.

Specifically, a method for perform sounding for multiple DL TRPs (for DL CSI acquisition) based on limited SRS resources is described in Proposal 1 below.

Proposal 1

For an SRS resource(s) within a specific SRS resource set, a plurality of multiple (up to 4) spatialRelationInfo/(-joint or separate UL) TCIs may be configured/indicated. The usage of the specific SRS resource set may be set to an antenna switching, a beamManagement, a codebook, or a nonCodebook.

Hereinafter, 'spatialRelationInfo/TCI' may mean a higher layer parameter spatialRelationInfo or a higher layer parameter TCI state. The spatialRelationInfo is related to a configuration of a spatial relation between a target SRS and a reference RS. The TCI state may be based on a separate TCI state (UL TCI state) or a joint TCI state. The UL TCI state may be indicated based on TCI-UL-StateId, and the joint TCI state may be indicated based on TCI-StateId.

As an example, a plurality of spatialRelationInfo parameters may be configured in the SRS resources within the specific SRS resource set, respectively.

As an example, a plurality of joint TCI states (e.g., TCI states configured based on dl-OrJointTCI-StateList within PDSCH-Config) may be configured in the SRS resources within the specific SRS resource set, respectively.

As an example, a plurality of separate TCI states (e.g., UL TCI state configured based on ul-TCI-StateList within BWPUplinkDedicated) may be configured in the SRS resources within the specific SRS resource set, respectively.

For periodic/semi-persistent SRS resource sets, the UE cyclically transmit the plurality of spatialRelationInfo/TCIs configured for each transmission instance of the SRS resource (set). Here, the cycling of spatialRelationInfo/TCI may mean that the UE performs SRS transmission while changing spatialRelationInfo/TCI. As an example, the transmission instance may be based on a periodicity related to the transmission of the SRS. The periodicity and the slot offset of SRS resources whose resource Type is semi-persistent or periodic may be set by the higher layer parameter periodicityAndOffset.

For example, the cyclic operation may be performed as follows.. It may be assumed that SRS resource #1 and SRS resource #2 are configured in SRS resource set #1 with a transmission cycle of 4 slots, and two spatialRelationInfo/TCIs are configured in each resource. The UE may transmit SRS resource #1 and SRS resource #2 based on spatialRelationInfo/TCI #1 upon transmitting SRS resource #1 and SRS resource #2 in slot #0. The UE may transmit SRS resource #2 and SRS resource #2 based on spatialRelationInfo/TCI #2 upon transmitting SRS resource #1 and SRS resource #2 in slot #4.

Here, SRS resource transmission or SRS resource set transmission may mean that SRS is transmitted on an SRS resource of an SRS resource or an SRS resource set.

A cyclic order of the spatialRelationInfo/TCI per SRS transmission instance may follow an order configured in each resource (set). Even in the case of the aperiodic SRS resource set, the UE may perform sounding for the plurality of TRPs (cyclically for each trigger/transmission instance) in the same scheme as P/SP (periodic SRS/semi-persistent SRS).

For example, cycling of the spatialRelationInfo/TCI may be performed for each instance in which the corresponding SRS resource set is triggered and transmitted via the DCI.

As another example, for the corresponding AP SRS resource set (i.e., the SRS resource set configured to aperiodic), a cyclic operation based on the following i) or ii) may be performed.

 i) The UE may transmit the SRS by cycling the spatialRelationInfo/TCI in consecutive (available UL) slots equal to the number of spatialRelationInfo/TCI set in the SRS resource(s) within the SRS resource set (or/and N (natural number) times the corresponding number) from the slot offset configured in the SRS resource set. The slot offset may mean an offset in number of slots between the triggering DCI and the actual transmission of this SRS-ResourceSet.

As an example, the UE may receive a DCI that triggers the SRS in slot n. The slot offset set in the SRS resource set related to the SRS may be k (e.g., 1 to 32). Two spatialRelationInfo/TCIs may be configured in two SRS resources in the SRS resource set, respectively. The UE may transmit the SRS by cycling two spatialRelationInfo/TCIs in consecutive UL slots including slot n + k as a first slot.

ii) (In addition to the slot offset set in the SRS resource set), the number of repeated transmissions and/or a transmission periodicity (e.g., X slot) may be set for the SRS resources in the SRS resource set. When the corresponding AP SRS resource set is triggered, the corresponding SRS resource set may be transmitted in a plurality of slots by cycling the spatialRelationInfo/TCI.

The number of repeated transmissions in Method ii above may be N times the number of spatialRelationInfo/TCIs set/indicated (N is a natural number). As yet another (or equivalent) example, different TRP IDs or different spatialRelationInfo/TCIs corresponding thereto may be configured to be implicitly connected/associated for each slot in advance. For example, slots 4n/4n+1/4n+2/4n+3 may be connected to/associated with TRP #0/1/2/3, respectively. When the AP SRS transmission triggering DCI is received, the UE may determine the SRS transmission slot by applying the slot offset (indicated through the DCI or set in the AP SRS resource set) based on the time of receiving the DCI. The UE may operate to generate/transmit the SRS based on the TRP ID connected to the corresponding SRS transmission slot or spatialRelationInfo/TCI corresponding thereto.

Or/and, the BS may use a separate field (up to 2 bits) of SRS triggering DL/UL DCI to indicate the spatialRelationInfo/TCI for SRS transmission. Specifically, based on the field, it may be indicated which of the multiple (up to 4) spatialRelationInfo/TCIs configured for each SRS resource are to be utilized for aperiodic SRS (resource set) transmission. As a specific example, the spatialRelationInfo/TCI to be used may be determined based on a value (codepoint) of the field. In the case of codepoint = "00", a first spatialRelationInfo/TCI set for the SRS resource(s) configured in the SRS resource set may be utilized for the SRS transmission. In the case of codepoint = "10", a second spatialRelationInfo/TCI set for the SRS resource(s) configured in the SRS resource set may be utilized for the SRS transmission.

In addition, an operation to trigger a plurality of SRS transmissions by indicating the plurality of spatialRelationInfo/TCIs through DL/UL grant DCI.

For example, when scheduling an M-TRP repetition PUSCH with the UL grant DCI, two SRIs may be indicated through two SRI fields. By enhancing this, the following operation may be performed. Two SRS resources (or/and two SRS resource sets to which two SRS resources belong) based on two SRIs indicated above may be triggered.

When two SRS resources (or/and two SRS resource sets to which two SRS resources belong) are triggered and transmitted, two spatialRelationInfo/TCIs based on the indicated two SRIs may be utilized for the transmission. In this case, when two SRIs are indicated through the DCI, a separate 1-bit field may exist within the DCI to indicate whether to trigger the indicated two SRS resources (sets). (Among the two SRS resource sets based on the two SRS resources indicated) the slot offset for each SRS resource set may also be set/indicated in advance.

As another example, an M-TRP PUSCH may be scheduled through the UL grant DCI that schedules an M-TRP repetition PUSCH, and an SRS resource set(s) of an M-TRP target may be triggered through an SRS request field in the DCI. At this time, the value (codepoint) of the SRS request field may be set to a value (codepoint) in which a plurality of SRS resource sets are connected/mapped.

In particular, in this case, as in the first example above, sounding may be performed when transmitting SRS resource set(s) by utilizing the two spatialRelationInfo/TCIs utilized in the two SRI indications as they are. Specifically, the following operation may be performed based on two SRS resource sets indicated based on the codepoint of the SRS request field. The UE may utilize a transmission beam (e.g., UL TX spatial filter) corresponding to the first SRI for a first SRS resource set, and the transmission beam corresponding to the second SRI for a second SRS resource set.

As another example, a dynamic update may be performed for a plurality of TCI state(s) for the M-TRP by utilizing the DL grant/non-grant DCI. At this time, the UE may apply a plurality of TCIs indicated by the DCI to the SRS resource set(s) of the M-TRP target for which a trigger is indicated in the SRS request field. Specifically, the following operation may be performed based on two SRS resource sets indicated based on the codepoint of the SRS request field. The UE may utilize a transmission beam (e.g., UL TX spatial filter) corresponding to the first TCI for a first SRS resource set, and the transmission beam corresponding to the second TCI for a second SRS resource set.

The operation of Proposal 1 may be applied in relation to the above-described operation. Specifically, based on the fact that a plurality of spatialRelationInfo/TCIs are indicated and that there is one target SRS resource set that is triggered, the following operation may be performed. The UE may transmit the SRS by cycling the plurality of spatialRelationInfo/TCIs for the SRS resource(s) within the corresponding SRS resource set as in Proposal 1.

Through the operation of Proposal 1, sounding for a plurality of TRPs (for DL CSI acquisition) may be performed using a single SRS resource set without an additional SRS resource configuration in a combination of the plurality of TRPs for a M-TRP (C-JT) DL transmission.

In addition, just as the plurality of spatialRelationInfo/TCIs are configured for each SRS resource in the SRS resource set, a plurality of SRS power control parameter sets may be configured as many as the number of spatialRelationInfo/TCIs in the SRS resource set.

The UE may apply the spatialRelationInfo/TCI cycling operation based on Proposal 1 above to the plurality of SRS power control parameter sets configured in the SRS resource set. Specifically, the UE may transmit the SRS by determining a transmission power by cycling the plurality of SRS power control parameter sets for each transmission instance of the SRS resource set.

A cyclic order of the plurality of power control parameter sets may follow an order configured in the SRS resource set.

When the UE supports a Rel-17 unified TCI configured/associated with power control parameters, the cycling of the power control parameter sets may be performed as follows. Since the power control parameter set is set in a plurality of TCI states (joint or separate UL) that are configured in the SRS resource(s) within the corresponding SRS resource set, the power control parameter set may be cycled simultaneously with the TCI cycling.

Hereinafter, an MAC CE format related to the above-described embodiment will be examined.

Specifically, when the plurality of spatialRelationInfo/TCIs are configured in the SRS resource(s) in the SRS resource set as described above, a MAC CE format for dynamically updating/activating the plurality of spatialRelationInfo/TCIs is proposed.

The MAC CE format may include a plurality of spatialRelationInfo/TCIs for each SRS resource for the target SRS resource set. As an example, the MAC CE format may include at least one field representing/indicating the plurality of spatialRelationInfo/TCIs for each SRS resource of the target SRS resource set.

When the SRS resource set is a resource set of a periodic component (i.e., an SRS resource set with resource Type set to periodic), it is impossible to update/activate the spatialRelationInfo/TCI set based on an RRC signaling via the MAC CE. In this regard, the following embodiment may be considered.

For the SRS resource(s) within the SRS resource set of the periodic component, the spatialRelationInfo/TCI for the cyclic transmission may be configured based on the RRC signaling. Specifically, a plurality of reference RS candidates of the spatialRelationInfo/TCI may be configured for each SRS resource. As an example, when up to 4 TRPs are considered, the spatialRelationInfo/TCI for each SRS resource may be configured as follows.

1) A plurality of candidates related to a first spatialRelationInfo/TCI
2) A plurality of candidates related to a second spatialRelationInfo/TCI
3) A plurality of candidates related to a third spatialRelationInfo/TCI
4) A plurality of candidates related to a fourth spatialRelationInfo/TCI
spatialRelationInfo/TCIs based on the plurality of candidates may be related to different reference RSs.

Hereinafter, the operation based on the embodiment described below will be more specifically described.

One of the configured candidate spatialRelationInfo/TCIs may be indicated based on the enhanced SRS spatialRelationInfo/TCI update/activation MAC CE (format). Specifically, one of the candidate spatialRelationInfo/TCIs (for the first to fourth spatialRelationInfo/TCIs in the cyclic transmission) configured by RRC may be indicated for the spatialRelationInfo/TCI update/activation for the SRS resource set of the periodic component. When it is assumed that even a second spatialRelationInfo/TCI is indicated, the spatialRelationInfo/TCI may be indicated as follows. Based on the MAC CE, i) one of the plurality of candidates related to the first spatialRelationInfo/TCI and one of the plurality of candidates related to the second spatialRelationInfo/TCI may be indicated.

As described above, based on the MAC CE, the UE may perform the update/activation for the corresponding P-SRS.

When a plurality of candidate spatialRelationInfo/TCIs (for the first to fourth spatialRelationInfo/TCIs in the cyclic transmission) are configured for the SRS resource set, the following problem may occur in the UE operation. When the P-SRS transmission is performed before the first MAC CE is indicated, there is an ambiguity in the UE operation as to which spatialRelationInfo/TCI among the plurality of candidates should be utilized for the corresponding SRS transmission. In order to solve the problem, the following embodiment may be considered.

The UE use the first spatialRelationInfo/TCI or/and the reference RS and/or TCI state with a lowest ID for the corresponding SRS transmission. A case where two spatialRelationInfo/TCIs are utilized is assumed and described.

As an example, i) a spatialRelationInfo/TCI associated with the reference RS having the lowest ID among the plurality of candidates related to the first spatialRelationInfo/TCI, and ii) a spatialRelationInfo/TCI associated with the reference RS having the lowest ID among the plurality of candidates related to the second spatialRelationInfo/TCI may be utilized for the SRS transmission.

As an example, i) a spatialRelationInfo/TCI having the lowest ID among the plurality of candidates related to the first spatialRelationInfo/TCI, and ii) a spatialRelationInfo/TCI having the lowest ID among the plurality of candidates related to the second spatialRelationInfo/TCI may be utilized for the SRS transmission. The spatialRelationInfo/TCI having the lowest ID may be a TCI state having the lowest ID (i.e., the lowest tci-StateId) or a first spatialRelationInfo among the plurality of candidates.

An MAC CE format for updating/activating a plurality of power control parameter sets may be utilized for a specific SRS resource set.

When the BS configures/indicated to change the spatialRelationInfo/TCI for the SRS resource(s) within the specific SRS resource set, the UE may change the spatialRelationInfo/TCI starting from 3 msec after transmitting an ACK for the change configuration/indication (e.g., MAC-CE). Such an operation reduces the ambiguity for the time of changing the spatialRelationInfo/TCI and allows the UE to perform the change operation through a clear timeline.

When the spatialRelationInfo/TCI is changed for the SRS resource(s) in the SRS resource set, the UE may perform the sounding while cycling starting from the first spatialRelationInfo/TCI set after the timeline (e.g., first -> second -> third -> fourth -> first...).

Additionally, considering a situation where a main serving TRP exists, a method may be considered in which, instead of cycling the plurality of spatialRelationInfo/TCIs at the same rate for each SRS resource in the SRS resource set, an additional frequency is assigned to a main (mostly used) target serving TRP and cycled. For example, when four spatialRelationInfo/TCIs are cycled in the same ratio (1:1:1:1), each spatialRelationInfo/TCI may be used and changed only once. However, according to the embodiment, the spatialRelationInfo/TCI may be cycled based on a ratio (e.g., 2:2:1:1) with different frequencies for each spatialRelationInfo/TCI. In this case, according to the ratio (e.g. 2:2:1:1), a specific spatialRelationInfo/TCI may be used twice and then changed to another spatialRelationInfo/TCI.

Or/and, when there is a TRP with an insufficient coverage, a method may be considered in which a symbol count/repetition factor of the SRS resource(s) within the corresponding SRS resource set (for the TRP with the insufficient coverage) is increased for each target TRP (for each Tx instance). That is, when transmitting SRS resource(s) within the SRS resource set with a specific spatialRelationInfo/TCI, the UE may perform the sounding (transmit the SRS) based on a value (e.g., 2 or 4) greater than the set symbol number/repetition factor (e.g., 1 or 2).

Problem 2: For SRS interference randomization between TRPs, dispersion in time/frequency/code domain is required in a multi-UE/TRP SRS configuration. As shown in Table 2 above, there are constraints in Rel-18 SRS enhancement, such as having to use an existing SRS comb structure as it is or not introducing a new SRS root sequence. As a result, slot/symbol-level comb value hopping, cyclic shift hopping, and introduction of an additional frequency hopping pattern are being discussed in a standardization meeting.

In Proposal 2, a method for configuring/indicating TRP specific sequence (group) hopping, frequency hopping pattern, comb value hopping pattern, and cyclic shift hopping pattern is proposed.

Proposal 2

The BS may, for SRS transmission of the UE (for an antenna switching usage), differently configure/indicate at least one of the following 1) to 8) for SRSs having different desired/target TRPs.

1) sequence initialization factor
2) sequence (group) hopping pattern
3) frequency hopping pattern
4) RB-level Partial Frequency Sounding (RPFS) pattern
5) comb value
6) comb value hopping pattern
7) cyclic shift
8) cyclic shift hopping pattern

The SRSs having different desired/target TRPs as mentioned above may be SRSs in which different UL spatialRelationInfo/TCIs are configured/indicated for a specific SRS and/or a plurality of SRSs.

For example, as in Proposal 1 above, it may be assumed that the plurality of spatialRelationInfo/TCIs are configured for each SRS resource in the specific SRS resource set. At this time, different SRS transmission instances transmitted based on different spatialRelationInfo/TCI (i.e., SRSs based on different SRS transmission instances) may be SRSs heading to different TRPs.

That is, in Proposal 1, at least one of 1) the sequence initialization factor, 2) the sequence (group) hopping pattern, 3) the frequency hopping pattern, 4) the RPFS pattern, 5) the comb value, 6) the comb value hopping pattern, 7) the cyclic shift, and/or 8) the cyclic shift hopping pattern may be differently configured/indicated for each different SRS transmission instance.

Or/and, when a target TRP (id) is explicitly configured for the SRS resource (set), SRS resources (sets) in which different target TRP (ids) are configured may be SRSs with different desired/target TRPs.

Proposal 2-1

Hereinafter, a method for configuring/indicating a TRP-specific sequence initialization factor or/and a TRP-specific sequence (group) hopping pattern for each SRS will be examined.

As shown in Table 3 below, in the NR SRS configuration, a sequence group u and a sequence number v are determined by a groupOrSequenceHopping parameter. The SRS sequence initialization factor as $n_{\mathrm{ID}}^{\mathrm{SRS}}$ (sequenceId), and the corresponding value may be set for each SRS resource. For a specific SRS resource, whether sequence group hopping and sequence hopping are performed are determined based on on/off of u and v. The SRS sequence determined by the sequenceId configured in the corresponding SRS resource may vary for each slot/symbol index.

[Table 3]

The sequence group $u = \left(f_{\mathrm{gh}}\left(n_{\mathrm{s,f}}^{\mu}, l'\right) + n_{\mathrm{ID}}^{\mathrm{SRS}}\right)\bmod 30$ and the sequence number v in clause 5.2.2 depends on the higher-layer parameter *groupOrSequenceHopping* in the *SRS-Resource* IE or the *SRS-PosResource* IE. The SRS sequence identity $n_{\mathrm{ID}}^{\mathrm{SRS}}$ is given by the higher layer parameter *sequenceId* in the *SRS-Resource* IE, in which case $n_{\mathrm{ID}}^{\mathrm{SRS}} \in$ {0,1, ..., 1023}, or the *SRS-PosResource-r16* IE, in which case $n_{\mathrm{ID}}^{\mathrm{SRS}} \in \{0, 1, ..., 65535\}$. The quantity $l' \in \{0,1, ..., N_{\mathrm{symb}}^{\mathrm{SRS}} - 1\}$ is the OFDM symbol number within the SRS resource.

- if *groupOrSequenceHopping* equals 'neither', neither group, nor sequence hopping shall be used and

$$f_{\mathrm{gh}}\left(n_{\mathrm{s,f}}^{\mu}, l'\right) = 0$$
$$v = 0$$

- if *groupOrSequenceHopping* equals 'groupHopping', group hopping but not sequence hopping shall be used and

$$f_{\mathrm{gh}}\left(n_{\mathrm{s,f}}^{\mu}, l'\right) = \left(\sum_{m=0}^{7} c\left(8\left(n_{\mathrm{s,f}}^{\mu} N_{\mathrm{symb}}^{\mathrm{slot}} + l_0 + l'\right) + m\right)\cdot 2^{m}\right)\bmod 30$$
$$v = 0$$

where the pseudo-random sequence c(i) is defined by clause 5.2.1 and shall be initialized with $c_{\mathrm{init}} = n_{\mathrm{ID}}^{\mathrm{SRS}}$ at the beginning of each radio frame.

- if *groupOrSequenceHopping* equals 'sequenceHopping', sequence hopping but not group hopping shall be used and

$$f_{\mathrm{gh}}\left(n_{\mathrm{s,f}}^{\mu}, l'\right) = 0$$

$$v = \begin{cases} c\left(n_{\mathrm{s,f}}^{\mu} N_{\mathrm{symb}}^{\mathrm{slot}} + l_0 + l'\right) & M_{\mathrm{sc},b}^{\mathrm{SRS}} \geq 6 N_{\mathrm{sc}}^{\mathrm{RB}} \\ 0 & \text{otherwise} \end{cases}$$

where the pseudo-random sequence c(i) is defined by clause 5.2.1 and shall be initialized with $c_{\mathrm{init}} = n_{\mathrm{ID}}^{\mathrm{SRS}}$ at the beginning of each radio frame.

According to Proposal 2-1, different sequence initialization factors or/and sequence (group) hopping patterns may be configured/indicated for SRS resources (sets) with different desired/target TRPs.

For the sequence group index u, a value of u may be set to vary between different SRSs with different desired/target TRPs based on the following i) and/or ii).

i) A $n_{\mathrm{ID}}^{\mathrm{SRS}}$ (sequenceId) value shown in Equation 1 below is set (differently) for each desired/target TRP

ii) $n_{\mathrm{ID}}^{\mathrm{SRS}}$ is configured only in TRP#0 (e.g., first SRS resource (set) transmission and/or the first SRS transmission instance in Proposal), and $n_{\mathrm{ID}}^{\mathrm{SRS}}$ is configured differently for each TRP by adding TRP ID (e.g., a $n_{\mathrm{ID}}^{\mathrm{SRS}}$ offset value between different desired/target TRPs and/or a $n_{\mathrm{ID}}^{\mathrm{SRS}}$ offset value for each SRS transmission instance in Proposal 1) to the corresponding $n_{\mathrm{ID}}^{\mathrm{SRS}}$ .

[Equation 1]

$$u = \left(f_{\mathrm{gh}}\left(n_{\mathrm{s,f}}^{\mu}, l'\right) + n_{\mathrm{ID}}^{\mathrm{SRS}}\right) \bmod 30$$

According to an embodiment, the u value may be varied between different SRSs having different desired/target TRPs by modifying/applying Equation 2 below.

Equation 2 may be a modular calculation formula for determining an existing $f_{\mathrm{gh}}\left(n_{\mathrm{s,f}}^{\mu}, l'\right)$ value, and may be expressed as $f_{\mathrm{gh}}\left(n_{\mathrm{s,f}}^{\mu}, l'\right) = (X) \bmod 30$ . According to the embodiment, in the multi-TRP based SRS transmission situation, Equation 2 may be applied in a modified form such as a form of $f_{\mathrm{gh}}\left(n_{\mathrm{s,f}}^{\mu}, l'\right) = (X + \text{TRP-specific offset value}) \bmod 30$ and/or a form of $f_{\mathrm{gh}}\left(n_{\mathrm{s,f}}^{\mu}, l'\right) = (X) \bmod 30 + \text{TRP-specific offset value}$ . In this case, the TRP-specific offset value may mean an offset value that is set individually/independently for each TRP ID (e.g., for each SRS where different UL spatialRelationInfo/TCIs are configured/indicated). This allows the u values to vary between different SRSs with different desired/target TRPs.

[Equation 2]

Through the operation of Proposal 2-1 above, the sequenceId value may be set differently or the sequence (group)

$$f_{\mathrm{gh}}\left(n_{\mathrm{s,f}}^{\mu}, l'\right) = \left(\sum_{m=0}^{7} c\left(8\left(n_{\mathrm{s,f}}^{\mu} N_{\mathrm{symb}}^{\mathrm{slot}} + l_0 + l'\right) + m\right) \cdot 2^{m}\right) \bmod 30$$

hopping pattern may be configured differently for the SRSs heading to different TRPs. This allows an interference randomization effect to be achieved through a collision between orthogonal (or quasi-orthogonal) sequences when a plurality of SRSs (from a plurality of UEs) heading to different TRPs collide in a time/frequency domain.

Proposal 2-2

Hereinafter, a method for configuring/indicating the TRP-specific frequency hopping pattern for each SRS will be examined.

As in Table 4 below, in the NR SRS configuration, when $b_{\mathrm{hop}}$ configured in the higher layer is equal to or larger than $B_{\mathrm{SRS}}$, the frequency hopping is disabled, so a frequency domain index $n_b$ value is fixed, and when $b_{\mathrm{hop}}$ is smaller than $B_{\mathrm{SRS}}$, the frequency hopping is enabled, so the frequency domain index $n_b$ value is hopped according to an increase of an SRS counter $n_{\mathrm{SRS}}$.

[Table 4]

| Frequency hopping of the sounding reference signal is configured by the parameter $b_{\mathrm{hop}} \in \{0,1,2,3\}$, given by the field *b-hop* contained in the higher-layer parameter *freqHopping* if configured, otherwise $b_{\mathrm{hop}} = 0$. |
| --- |

(continued)

If $b_{hop} \geq B_{SRS}$, frequency hopping is disabled and the frequency position index $n_b$ remains constant (unless reconfigured) and is defined by

$$n_b = \lfloor 4n_{RRC}/m_{SRS,b} \rfloor \bmod N_b$$

for all $N_{symb}^{SRS}$ OFDM symbols of the SRS resource. The quantity $n_{RRC}$ is given by the higher-layer parameter *freqDomainPosition* if configured, otherwise $n_{RRC} = 0$, and the values of $m_{SRS,b}$ and $N_b$ for b = $B_{SRS}$ are given by the selected row of Table 6.4.1.4.3-1 corresponding to the configured value of $C_{SRS}$.

If $b_{hop} < B_{SRS}$, frequency hopping is enabled and the frequency position indices $n_b$ are defined by

$$n_b = \begin{cases} \lfloor 4n_{RRC}/m_{SRS,b} \rfloor \bmod N_b & b \leq b_{hop} \\ \left(F_b(n_{SRS}) + \lfloor 4n_{RRC}/m_{SRS,b} \rfloor\right) \bmod N_b & \text{otherwise} \end{cases}$$

where $N_b$ is given by Table 6.4.1.4.3-1,

$$F_b(n_{SRS}) = \begin{cases} (N_b/2) \left\lfloor \dfrac{n_{SRS} \bmod \Pi_{b'=b_{hop}}^{b} N_{b'}}{\Pi_{b'=b_{hop}}^{b-1} N_{b'}} \right\rfloor + \left\lfloor \dfrac{n_{SRS} \bmod \Pi_{b'=b_{hop}}^{b} N_{b'}}{2\Pi_{b'=b_{hop}}^{b-1} N_{b'}} \right\rfloor & \text{if } N_b \text{ even} \\ \lfloor N_b/2 \rfloor \lfloor n_{SRS}/\Pi_{b'=b_{hop}}^{b-1} N_{b'} \rfloor & \text{if } N_b \text{ odd} \end{cases}$$

and where $N_{b_{hop}} = 1$ regardless of the value of $N_b$. The quantity $n_{SRS}$ counts the number of SRS transmissions. For the case of an SRS resource configured as aperiodic by the higher-layer parameter *resourceType,* it is given by

$$n_{SRS} = \lfloor l'/R \rfloor$$ within the slot in which the $N_{symb}^{SRS}$ symbol

---

SRS resource is transmitted. The quantity $R \leq N_{symb}^{SRS}$ is the repetition factor given by the field *repetitionFactor* if configured, otherwise $R = N_{symb}^{SRS}$.

For the case of an SRS resource configured as periodic or semi-persistent by the higher-layer parameter *resourceType,* the SRS counter is given by

$$n_{SRS} = \left(\frac{N_{slot}^{frame,\mu} n_f + n_{s,f}^{\mu} - T_{offset}}{T_{SRS}}\right) \cdot \left(\frac{N_{symb}^{SRS}}{R}\right) + \left\lfloor \frac{l'}{R} \right\rfloor$$

for slots that satisfy $\left(N_{slot}^{frame,\mu} n_f + n_{s,f}^{\mu} - T_{offset}\right) \bmod T_{SRS} = 0$. The periodicity $T_{SRS}$ in slots and slot offset $T_{offset}$ are given in clause 6.4.1.4.4.

---

According to Proposal 2-2, different frequency hopping patterns may be configured/indicated by setting different $b_{hop}$ values for the SRS resources (sets) with different desired/target TRPs.

In the case where the UE transmits the plurality of spatialRelationInfo/TCIs in the cyclic manner by utilizing the specific SRS resource (set) based on Proposal 1, the following configuration may be applied.

By setting different $b_{hop}$ values for each SRS transmission instance with different spatialRelationInfo/TCIs, different frequency hopping patterns may be configured/indicated for each SRS transmission instance.

The embodiment proposes an operation in which the $b_{hop}$ value varies dependently on cycled/changed spatialRelationInfo/TCI in the specific SRS resource (set).

Through the operation of Proposal 2-2 above, the frequency hopping pattern value may be configured differently for the SRSs heading to different TRPs. Through this, when the plurality of SRSs (from the plurality of UEs) heading to different TRPs collide in the time/frequency domain, the SRSs sound different hopping bands or have different hopping patterns, so the interference randomization effect may be achieved.

Proposal 2-3

Hereinafter, a method for configuring/indicating TRP-specific RB-level Partial Frequency Sounding (RPFS) startRBIndex and/or EnableStartRBHopping for each SRS will be examined.

In order to enhance an SRS coverage/capacity in Rel-17 SRS enhancement, standardization is carried out to sound 1/2 or 1/4 of the SRS bandwidth configured for a situation in which the frequency hopping is enabled/disabled. The following configuration/operation may be performed in relation to utilization of a partial band of the SRS bandwidth.

A value of $P_F \in \{2, 4\}$ may be set, and startRBIndex for configuring for which partial band among $P_F$ partial bands corresponding to perform sounding may be configured. For example, startRBIndexAndFreqScalingFactor2 or startRBIndexAndFreqScalingFactor4 may be configured based on partialFreqSounding. start RB index may be configured in which the frequency scaling factor (the $P_F$) is 2 based on startRBIndexAndFreqScalingFactor2. start RB index may be configured in which the frequency scaling factor (the $P_F$) is 4 based on startRBIndexAndFreqScalingFactor4.

EnableStartRBHopping for determining whether to perform hopping may be configured in $P_F$ partial bands. For example, enableStartRBHopping may be set to enable.

For example, Start RB hopping may be performed as follows.

When $P_F = 2$, hopping may be performed in a form of 0, 1, 0, 1 ... with respect to startRBIndex. The startRBIndex may be set to 0 or 1 (e.g., the startRBIndexAndFreqScalingFactor2 is set to 0 or 1).

When $P_F = 4$, the hopping may be performed in a form of 0, 2, 1, 3, 0, 2, 1, 3 ... with respect to startRBIndex. The startRBIndex may be set to 0, 1, 2, or 3 (e.g., the startRBIndexAndFreqScalingFactor4 is set to 0, 1, 2, or 3).

According to Proposal 2-3, different startRBIndex and/or EnableStartRBHopping may be configured/indicated for SRS resources (sets) with different desired/target TRPs. This allows different partial bands to be sounded or different start RB hopping patterns to be configured/indicated.

Specifically, different start RB hopping patterns may be configured/indicated even if the $P_F$ value is the same for SRS resources (sets) with different desired/target TRPs (e.g., SRS #1 = "0, 2, 1, 3, 0, 2, 1, 3 ..", SRS #2 = "2, 1, 3, 0, 2, 1, 3, 0 ..", and SRS #3 = "0, 1, 2, 3, 0, 1, 2, 3 ..".

In the case where the UE transmits the SRS by cycling the plurality of spatialRelationInfo/TCIs by utilizing the specific SRS resource (set) based on Proposal 1, the following configuration may be applied.

Different startRBIndex values may be configured/indicated or different frequency hopping patterns may be configured/indicated for each SRS transmission instance with different spatialRelationInfo/TCIs. This allows different partial bands to be sounded or different start RB hopping patterns to be configured/indicated for each SRS transmission instance.

The embodiment proposes an operation in which the startRBIndex and/or start RB hopping pattern varies dependently on cycled/changed spatialRelationInfo/TCI in the specific SRS resource (set).

Through the operation of Proposal 2-3, the start RB hopping pattern may be configured differently (in the RPFS) for the SRSs heading to different TRPs. Through this, when the plurality of SRSs (from the plurality of UEs) heading to different TRPs collide in the time/frequency domain, the SRSs sound different partial bands or have different start RB hopping patterns, so the interference randomization effect may be achieved.

Proposal 2-4

Hereinafter, a method for configuring/indicating the TRP-specific comb value and/or comb value hopping pattern for each SRS will be examined.

According to Proposal 2-4, different comb value offset and/or comb offset value hopping pattern may be configured/indicated for SRS resources (sets) with different desired/target TRPs. The method for configuring/indicating different comb offset values and/or different comb offset value hopping patterns will be specifically described below.

As an example, even though comb values of the SRS resources (sets) having different desired/target TRPs are the same as each other, different comb offsets may be configured/indicated in each SRS resource (set).

As an example, when the comb offset hopping and/or the comb value hopping are/is supported in the SRS, the following configuration/operation may be performed. Different comb offset hopping patterns and/or comb value hopping patterns may be configured/indicated in the SRS resources (sets) with different desired/target TRPs.

For example, when a set comb value is 4, different comb offsets 0 and 3 may be configured/indicated for the SRS resources (sets) with different desired/target TRPs.

For example, when hopping the comb offset value is supported according to an increase in SRS counter $n_{SRS}$ or/and an increase in number of slots/symbols, the following configuration/operation may be performed. For SRS resources (sets) with different desired/target TRPs (even if the initial comb offset values are the same), different hopping patterns may be configured/indicated like "comb offset = 0, 2, 3, 1, 0, 2, 3, 1..." and "comb offset = 0, 1, 2, 3, 0, 1, 2, 3 ..."

In the case where the UE transmits the SRS by cycling the plurality of spatialRelationInfo/TCIs by utilizing the specific SRS resource (set) based on Proposal 1, the following configuration may be applied.

Different comb offset values may be configured/indicated or different comb offset hopping patterns may be configured/indicated for each SRS transmission instance with different spatialRelationInfo/TCIs. This allows different frequency resources to be sounded or different comb offset hopping patterns to be configured/indicated for each SRS transmission instance.

The embodiment proposes an operation in which the comb offset and/or comb offset hopping pattern varies dependently on cycled/changed spatialRelationInfo/TCI in the specific SRS resource (set).

Through the operation of Proposal 2-4 above, the comb offset and/or comb offset hopping pattern may be configured differently for the SRSs heading to different TRPs. Through this, when the plurality of SRSs (from the plurality of UEs) heading to different TRPs collide in the time/frequency domain, the SRSs sound different frequency resources or have different comb offset hopping patterns, so the interference randomization effect may be achieved.

Proposal 2-5

Hereinafter, a method for configuring/indicating a TRP-specific CS value and/or CS value hopping pattern for each SRS will be examined.

According to Proposal 2-5, different CS values and/or CS value hopping patterns may be configured/indicated for SRS resources (sets) with different desired/target TRPs. A method for configuring/indicating different CS values and/or different CS value hopping patterns will be specifically described below.

First, by citing a PUCCH CS hopping equation, the method is described. In Equation 3 below, $m_0$ may be interpreted as a CS value set in the SRS resource.

According to Proposal 2-5, the CS value may be set to vary between different SRSs with different desired/target TRPs based on the following i) and/or ii).

i) The $m_0$ value is set differently for each desired/target TRP.

ii) $m_0$ is configured only in TRP#0 (e.g., first SRS resource (set) transmission and/or the first SRS transmission instance in Proposal), and $m_0$ is configured differently for each TRP by adding TRP ID (e.g., a CS offset value between different desired/target TRPs and/or a CS offset value for each SRS transmission instance in Proposal 1) to the corresponding $m_0$.

[Equation 3]

$$\alpha_l = \frac{2\pi}{N_{sc}^{RB}} \left( \left( m_0 + n_{cs}\left( n_{s,f}^{\mu}, l + l' \right) \right) \bmod N_{sc}^{RB} \right)$$

According to an embodiment, the CS value may be varied between different SRSs having different desired/target TRPs by modifying/applying Equation 4 below.

Equation 4 may be a calculation formula for determining the $n_{cs}\left( n_{s,f}^{\mu}, l \right)$ value, and may be expressed as $n_{cs}\left( n_{s,f}^{\mu}, l \right) = $ X.

According to the embodiment, Equation 4 may be applied to a modified form such as $n_{cs}\left( n_{s,f}^{\mu}, l \right) = X + TRP\text{-specific}$ CS offset value. In this case, the TRP-specific CS offset value may mean an offset value that is set individually/independently for each TRP ID (e.g., for each SRS where different UL spatialRelationInfo/TCIs are configured/indicated). Such an operation allows the CS values to vary between different SRSs with different desired/target TRPs.

[Equation 4]

$$n_{cs}\left( n_{s,f}^{\mu}, l \right) = \sum_{m=0}^{7} 2^m c\left( 8 N_{symb}^{slot} n_{s,f}^{\mu} + 8l + m \right)$$

In Equation 3 above, a constant related to the number of subcarriers ($N_{sc}^{RB}$) within 1 RB in Equation 3 above is enabled to be modified in the equation according to the comb value set in the SRS. In the case of a constant related to a max CS value in Equation 5 above, a max CS value to be applied may be different depending on the comb value set in the SRS. It is apparent that the equation based on Proposal 2-5 described above does not limit a technical idea according to the present disclosure, and that modification of the equation may also be included in the technical idea according to the present disclosure.

Through the operation of Proposal 2-5 above, the CS value may be configured differently or the CS hopping pattern may be configured differently for the SRSs heading to different TRPs. This allows the interference randomization effect to be achieved through a collision between orthogonal (or quasi-orthogonal) sequences when the plurality of SRSs (from a plurality of UEs) heading to different TRPs collide in the time/frequency domain.

In Proposal 2 above, when the SRS is to be transmitted at an additional frequency for the main (mostly used) target serving TRP, the following methods may be considered. A sequence group/CS hopping distance between two TRPs may be increased to the maximum by preferentially considering a reduction between SRS resources (sets) heading to the main target serving TRPs (TRP#0 and TRP#1), and cases including other TRP#2 and TRP##3 may be considered secondarily.

Specifically, the orthogonality may be increased by setting/indicating the sequence group/CS hopping distance to the maximum for the SRSs heading to the main TRP, and the interference between the main TRPs may be reduced by positioning the sequence group and/or CS value of SRSs heading to the remaining TRPs between the distances.

An example of the UE (or BS) operation based on at least one of the embodiments described above (e.g. at least one of Proposal 1, Proposal 2, Proposal 2-1, Proposal 2-2, Proposal 2-3, Proposal 2-4, and/or Proposal 2-5) is as follows.

1) (M-TRP related) Receiving (transmitting) SRS related configuration information

Specifically, the configuration information may include information based on at least one of Proposal 1, Proposal 2, Proposal 2-1, Proposal 2-2, Proposal 2-3, Proposal 2-4, and/or Proposal 2-5. As an example, based on the configuration information, a plurality of spatialRelationInfo/TCIs may configured/indicated for an SRS resource in a specific SRS resource set. As an example, based on the configuration information, at least one of 1) the sequence initialization factor, 2) the sequence (group) hopping pattern, 3) the frequency hopping pattern, 4) the RPFS pattern, 5) the comb offset, 6) the comb offset hopping pattern, 7) the cyclic shift, and/or 8) the cyclic shift hopping pattern may be differently configured/indicated for different SRS resources (sets) having different desired/target TRPs.

2) Transmitting (receiving) SRS based on P/SP/AP-SRS transmission configuration/activation/indication

Specifically, the UE may transmit an SRS resource set(s) configured/activated/indicated by RRC/MAC CE/DCI based on at least one of Proposal 1, Proposal 2, Proposal 2-1, Proposal 2-2, Proposal 2-3, Proposal 2-4, and/or Proposal 2-5.

The UE/BS operations are only examples, and each operation (or step) is not necessarily required, and operations related to uplink transmission of the UE according to the above-described embodiments may be omitted or added depending on the UE/BS implementation scheme.

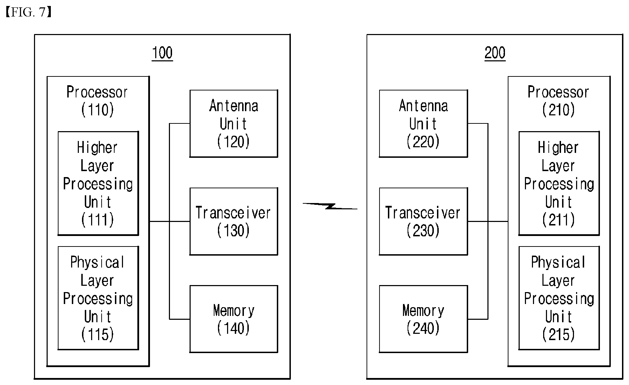

In terms of implementation, the operations of the BS/UE according to the above-described embodiments (e.g., operations related to the SRS based on at least one of Proposal 1, Proposal 2, Proposal 2-1, Proposal 2-2, Proposal 2-3, Proposal 2-4, and/or Proposal 2-5) may be processed by an apparatus (e.g., processors 110 and 202 in FIG. 7) in FIG. 7 to be described below.

Further, the operations of the BS/UE according to the above-described embodiment (e.g., operations related to the SRS based on at least one of Proposal 1, Proposal 2, Proposal 2-1, Proposal 2-2, Proposal 2-3, Proposal 2-4, and/or Proposal 2-5) may be stored in memories (e.g., 140 and 204 in FIG. 7) in the form of an instruction/program (e.g., instruction or executable code) for driving at least one processor (e.g., 110 and 210 in FIG. 7).

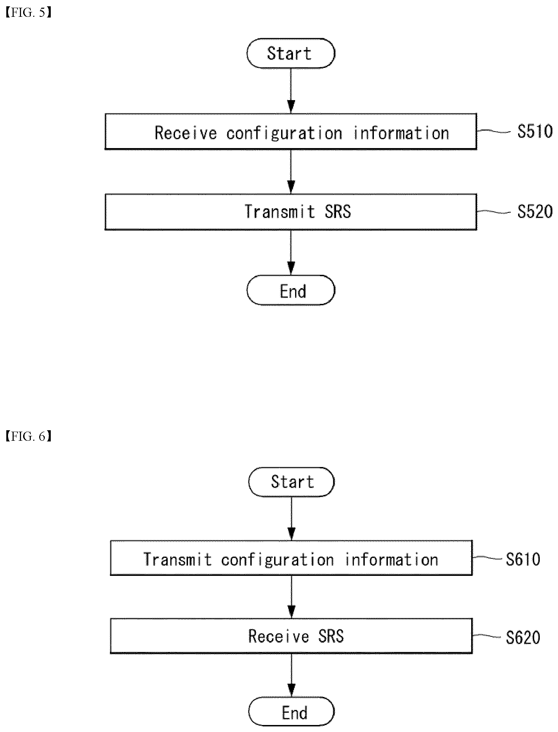

Hereinafter, the above-described embodiments will be described in detail with reference to FIGS. 5 and 6 in terms of the operations of the UE and the BS. Methods to be described below are just distinguished for convenience of description and it is needless to say that some components of any one method may be substituted with some components of another method or may be applied in combination with each other.

FIG. 5 is a flowchart for describing a method performed by a user equipment according to an embodiment of the present disclosure.

Referring to FIG. 5, a method performed by a UE in a wireless communication system according to an embodiment of the present disclosure includes a configuration information receiving step (S510) and an SRS transmitting step (S520).

In S510, the UE receives configuration information related to a sounding reference signal (SRS) from the BS. The configuration information includes information on at least one SRS resource set. As an example, the configuration information may be based on SRS-Config in Table 1.

The configuration information may include information related to the configuration based on at least one of Proposal 1, Proposal 2, Proposal 2-1, Proposal 2-2, Proposal 2-3, Proposal 2-4, and/or Proposal 2-5.

According to an embodiment, a usage of the at least one SRS resource set may be set to an antenna switching, a codebook, a non-codebook, or a beam management.

In S520, the UE transmits the SRS to the BS based on the at least one SRS resource set.

The SRS may be transmitted based on at least one of 1) the sequence initialization factor, 2) the sequence (group) hopping pattern, 3) the frequency hopping pattern, 4) the RPFS pattern, 5) the comb value, 6) the comb value hopping pattern, 7) the cyclic shift, and/or 8) the cyclic shift hopping pattern based on the above-described embodiment.

Specifically, at least one of 1) to 8) above may be differently configured/indicated/applied for different SRS transmission instances transmitted based on different spatialRelationInfo/TCIs based on at least one of Proposal 2-1, Proposal 2-2, Proposal 2-3, Proposal 2-4, and/or Proposal 2-5.

The SRS may be a periodic SRS, an aperiodic SRS, or a semi-persistent SRS.

The SRS may be associated with a plurality of transmission and reception points (TRPs) for a usage of coordinated joint transmission (CJT). The SRS may be transmitted based on a beam or an uplink transmission space filter associated with each of the plurality of TRPs. When the number of the plurality of TRPs increases, the number of SRS resources associated with each TRP may increase excessively. The embodiments for solving the problem will be specifically described below.

According to an embodiment, the at least one SRS resource set may include one or more SRS resources. At this time, each the SRS resource may be related to one or more TCI-states or one or more spatial relation configurations. The embodiment may be based on Proposal 1.

According to an embodiment, a reference RS for an uplink transmission (UL Tx) spatial filter related to the SRS may be based on i) the one or more TCI-states or ii) the one or more spatial relation configurations.

According to an embodiment, a time domain behavior based on a resource type related to the at least one SRS resource set is periodic or semi-persistent.

At this time, the TCI-state or spatial relation configuration related to the reference RS may be changed based on a periodicity of each SRS resource. The embodiment may be based on a cyclic operation of the spatialRelationInfo/TCI related to the periodic/semi-persistent SRS resource set of Proposal 1. Hereinafter, the embodiment will be described as an example.

It may be assumed that SRS resource #1 and SRS resource #2 are configured in SRS resource set #1, two spatialRelationInfo/TCIs are configured for each SRS resource, and the periodicity of each SRS resource is 4 slots.

The UE may transmit SRS resource #1 and SRS resource #2 based on spatialRelationInfo/TCI #1 in slot #0. In other words, the UE may transmit the SRS based on TCI-state #1 (or spatial relationship configuration #1) in SRS resource #1 and SRS resource #2 within slot #0.

The UE may transmit SRS resource #2 and SRS resource #2 based on spatialRelationInfo/TCI #1 in slot #4. In other words, the UE may transmit the SRS based on TCI-state #2 (or spatial relation configuration #1) in SRS resource #2 and SRS resource #2 within slot #4.

According to the example described above, the TCI-state or spatial relation configuration related to the reference RS is TCI-state #1 (or spatial relation configuration #1) in slot #0. The TCI-state or spatial relation configuration related to the reference RS is TCI-state #2 (or spatial relation configuration #2) in slot #4.

The TCI-state or spatial relation configuration related to the reference RS may be changed for each slot according to the periodicity. Hereinafter, the details will be explained.

According to an embodiment, the SRS may be transmitted in one or more slots (e.g., slot #0, slot #4, slot#8, slot#12..) based on the periodicity (e.g., 4 slots).

The one or more slots may include i) at least one first slot (e.g., slot #0, slot #8..) and ii) at least one second slot (e.g., slot #4, slot #12..).

The at least one second slot may be based on a slot after the slots (e.g., 4 slots) based on the periodicity from the at least one first slot. For example, when the first slot is slot n and the periodicity is k, the second slot may be slot n + k.

A TCI-state or spatial relation configuration related to the at least one first slot (e.g., TCI-state/spatial relation configuration #1 or TCI-state/spatial relation configuration #3) may be different from a TCI-state or spatial relation configuration related to the at least one second slot (e.g., TCI-state/spatial relation configuration #2 or TCI-state/spatial relation configuration #4).

The method may further include a DCI receiving step. In the DCI receiving step, the UE receives downlink control information (DCI) related to the SRS from the BS.

As an example, the DCI may be a DCI that triggers the SRS.

As an example, the DCI may be a DCI for scheduling a physical uplink shared channel (PUSCH).

As an example, the DCI may be a DCI for scheduling a physical downlink shared channel (PDSCH).

The DCI receiving step may be performed before S520 or after S520.

As an example, the DCI may be a DCI for triggering the SRS (or SRS resource set(s)) or indicating information related to the SRS. The SRS may be transmitted based on information determined based on the DCI. Based on the DCI, at least one of the at least one SRS resource set, the one or more TCI-states, and/or the one or more spatial relation configurations may be determined.

As an example, the DCI may be a DCI that schedules the PUSCH after transmitting the SRS. The DCI may include an SRS resource indicator (SRI) indicating one of the SRS resources of the at least one SRS resource set.

According to an embodiment, a time domain behavior based on a resource type related to the at least one SRS resource set is aperiodic.

Hereinafter, the embodiments related to the cyclic operation of the spatialRelationInfo/TCI related to the aperiodic SRS resource set of Proposal 1 will be specifically described.

According to an embodiment, the TCI-state or spatial relation configuration related to the reference RS may be changed whenever the SRS is triggered based on the DCI.

According to an embodiment, one or more slots for transmitting the SRS may be determined based on a slot offset of the at least one SRS resource set.

The slot offset may be based on the DCI that triggers the SRS and the number of slots between transmissions of the SRS. The following description is made by assuming that the DCI is received in slot n and the slot offset is 3.

One or more slots including slot n + 3 may be determined based on the slot offset (3). At this time, the number of the one or more slots may be determined based on a number of the one or more TCI-states or a number of the one or more spatial relation configurations. When the number of the one or more TCI-states is 4, four slots (slot n + 3 to slot n + 6) including slot n + 3 may be determined.

The TCI-state or spatial relation configuration related to the reference RS may be changed based on the one or more slots. At this time, the TCI-state or spatial relation configuration related to the reference RS may be changed for each slot or may be changed to a TCI-state or spatial relation configuration based on a slot index.

As an example, the TCI-state or spatial relation configuration related to the reference RS may be changed for each slot among the one or more slots. The number of the one or more slots may be determined based on the number of the one or more TCI-states or the number of the one or more spatial relation configurations. As a specific example, the number of the one or more slots may be N (which is a natural number) times the number of the one or more TCI-states (or the number of the one or more spatial relation configurations).

As an example, the TCI-state or spatial relation configuration related to the reference RS may be changed based on an index of each slot among the one or more slots. The index of each slot may be associated with i) one of the one or more TCI-states or ii) one of the one or more spatial relation configurations.

According to an embodiment, the at least one SRS resource set may include two SRS resource sets triggered based on the DCI. The embodiment may be based on the embodiments related to the operation in which SRS transmission is triggered based on the DL/UL grant DCI in Proposal 1. The two SRS resource sets may be triggered based on a field of the DCI (newly added/defined field (e.g., a 1 bit field) or an existing field (e.g., an SRS request field)).

As an example, the DCI may include a 1 bit field. The two SRS resource sets may be triggered based on the 1 bit field. At this time, the DCI may include i) a first SRS resource indicator field and ii) a second SRS resource indicator field. A first SRS resource of the first SRS resource set may be indicated based on the first resource indicator field. A second SRS resource of the second SRS resource set may be indicated based on the second resource indicator field.

The first resource set and the second resource set corresponding to the two SRS resource sets may be triggered based on the 1 bit field. The 1 bit field may be a newly defined/specified field based on the reserved bits of the DCI.

When the two SRS resource sets (i.e., the first/second resource sets) are triggered by the 1 bit field, the following operation may be performed.

For the first SRS resource set, the SRS may be transmitted based on a TCI-state or spatial relation configuration configured in the first SRS resource. In other words, in all SRS resources of the first resource set or the first SRS resource, the SRS may be transmitted based on the TCI-state or spatial relation configuration configured in the first SRS resource.

For the second SRS resource set, the SRS may be transmitted based on a TCI-state or spatial relation configuration configured in the second SRS resource. In other words, in all SRS resources of the second resource set or the second SRS resource, the SRS may be transmitted based on the TCI-state or spatial relation configuration configured in the second SRS resource.

As an example, the DCI may include an SRS request field. The two SRS resource sets may be triggered based on a codepoint of the SRS request field. The codepoint may be a codepoint to which the two SRS resource sets are mapped among codepoints of the SRS request field. At this time, the SRS may be transmitted based on i) two TCI-states or two spatial relation configurations based on two SRS resource indicators (SRIs) or ii) two TCI-states indicated based on a TCI field. Hereinafter, the operations of i) and ii) above will be specifically described. Hereinafter, a 1st SRS resource set and a 2nd SRS resource set mapped to the codepoint of the SRS request field may be equal to or different from a 1st SRS resource set and a 2nd SRS resource set based on two SRS resource indicator fields.

According to an embodiment, the DCI (e.g., UL grant DCI) may include i) a first SRS resource indicator field and ii) a second SRS resource indicator field.

A first SRS resource of the first SRS resource set may be indicated based on the first SRS resource indicator field. A second SRS resource of the second SRS resource set may be indicated based on the second SRS resource indicator field.

For a 1st SRS resource set mapped to the codepoint, the SRS may be transmitted based on the TCI-state or spatial relation configuration configured in the first SRS resource.

For a 2nd SRS resource set mapped to the codepoint, the SRS may be transmitted based on the TCI-state or spatial relation configuration configured in the second SRS resource.

According to an embodiment, the DCI (e.g., DL grant/non-grant DCI) may include a transmission configuration indication (TCI) field.

**EP 4 564 723 A1**

Based on the TCI field, two TCI states (e.g., a first TCI-state and a second TCI-state) may be indicated. For example, the codepoint of the TCI field may be a codepoint to which the two TCI states are mapped among codepoints of the TCI field. At this time, the two TCI states may be applied to two SRS resource sets mapped to the codepoints of the SRS request field, respectively.

For the 1st SRS resource set mapped to the codepoint, the SRS may be transmitted based on the first TCI state.

For the 2nd SRS resource set mapped to the codepoint, the SRS may be transmitted based on the second TCI state.

In a conventional scheme, for a periodic SRS or a periodic SRS resource set, spatialRelationInfo/TCIs configured based on an RRC signaling may not be updated/activated/deactivated after the configuration. An embodiment for indicating (updating/activating/deactivating) spatialRelationInfo/TCI(s) related to the periodic SRS resource set is described below in detail. The embodiment may be based on the embodiment related to the MAC CE format of Proposal 1.

The method may further include an MAC CE receiving step. In the MAC CE receiving step, the UE receives a medium access control control element (MAC CE) from the BS. The MAC CE receiving step may be performed before S520.

According to an embodiment, the MAC CE may include at least one field related to each SRS resource of the at least one SRS resource set. The at least one field may be related to i) the one or more TC-states among candidate TCI-states or ii) the one or more spatial relation configurations among candidate spatial relation configurations.

The candidate TCI-states (candidate spatial relation configurations) may include candidates for each of up to four spatialRelationInfo/TCIs configured based on the RRC signaling for each SRS resource.

For example, it may be assumed that four spatial relation configurations (four TCI-states) are configured/utilized for each SRS resource (periodic SRS). In this case, the candidate TCI-states (candidate spatial relation configurations) may include i) candidates related to a first TCI-state (first spatial relation configuration), ii) candidates related to a second TCI-state (second spatial relation configuration), iii) candidates related to a third TCI-state (third spatial relation configuration), and iv) candidates related to a fourth TCI-state (fourth spatial relation configuration).

The at least one field may be related to i) the one or more TC-states among candidate TCI-states or ii) the one or more spatial relation configurations among candidate spatial relation configurations.

For example, it may be assumed that each SRS resource is associated with four spatial relation configurations (four TCI-states). In this case, the at least one field may include i) a first field associated with one of the candidates related to the first TCI-state (first spatial relation configuration), ii) a second field associated with one of the candidates related to the second TCI-state (second spatial relation configuration), iii) a third field associated with one of the candidates related to the third TCI-state (third spatial relation configuration), and iv) a fourth field associated with one of the candidates related to the fourth TCI-state (fourth spatial relation configuration).

The at least one field may include an identifier of a resource used for a spatial relation configuration (e.g., an NZP CSI-RS resource index, an SSB index, or an SRS resource index) or an identifier of a TCI-state (e.g., a TCI-state ID).

The cyclic operation of the spatialRelationInfo/TCIs is described assuming that spatialRelationInfo/TCIs corresponding to each TRP are used at a uniform ratio. However, for a TRP that is primarily used (e.g. serving TRP) or have insufficient coverage compared to other TRPs, a spatialRelationInfo/TCI associated with the TRP needs to be used more frequently than spatialRelationInfo/TCIs associated with other TRPs. An embodiment of Proposal 1 related to this is described below in detail.

According to an embodiment, based on the reference RS being determined by i) a specific TCI-state among the one or more TCI-states or ii) a specific spatial relation configuration among the one or more spatial relation configurations,

the SRS may be transmitted based on a second number of symbols and/or a second repetition factor which have larger values than a first number of second symbols and/or a first repetition factor configured in the SRS resource related to the reference RS.

For example, in the SRS resource, the first number of symbols may be set to 1 (e.g., nrofSymbols may be set to n1 among n1, n2, and n4), and the first repetition factor may be set to 2 (e.g., repetitionFactor may be set to n2 among n1, n2, and n4).

Based on the reference RS being determined based on the specific TCI-state or the specific spatial relation configuration, the SRS may be transmitted based on the second symbol number set to 2 or 4 and/or the second repetition factor set to 4.

As an example, the specific TCI-state (the specific spatial relation configuration) may be predefined. As an example, the specific TCI-state (the specific spatial relation configuration) may be related to a specific TRP (e.g., a serving TRP or a TRP related to a PUCCH transmission) among a plurality of TRPs.

When SRS transmission for the plurality of TRPs is performed through such an operation, a spatial relation configuration/TCI-state associated with the specific TRP may be used at a higher frequency than spatial relation configurations/TCI-states associated with other TRPs.

Along with a cyclic application of the spatialRelationInfo/TCI described above, parameter sets containing power control parameters may be cyclically applied. The embodiment may be based on an embodiment related to the cyclic application of the SRS power control parameter sets of Proposal 1. Hereinafter, the details will be explained.

According to an embodiment, the at least one SRS resource set may be related to one or more parameter sets. Specifically, each SRS resource set may be related to the one or more parameter sets. As an example, the at least one SRS resource set may include one SRS resource set. The one resource set may be related to one or more parameter sets. As an example, the at least one SRS resource set may include two SRS resource sets. Each of the two resource sets may be related to one or more parameter sets.

Each parameter set may include one or more power control parameters related to the transmission power of the SRS (e.g., at least one of i) p0, ii) alpha, iii) closed loop index, and/or iv) pathlossReferenceRS).

A number of the one or more parameter sets is the same as i) a number of the one or more TCI-states or ii) a number of the one or more spatial relation configurations. As an example, when each SRS resource in an SRS resource set is related to two TCI-states (or spatial relation configurations), the SRS resource set may be related to two parameter sets.

Power control parameters for determining the transmission power of the SRS may be based on one of the one or more parameter sets. For example, it may be assumed that each SRS resource set is related to two parameter sets. The power control parameters for determining the transmission power of the SRS may be based on one of the two parameter sets cycled based on a specific criterion.

The power control parameters for determining the transmission power of the SRS may be changed based on the same criterion (e.g., the periodicity, trigger of the DCI, one or more slots or slot indices based on the slot offset, etc.) as the embodiment in which the TCI-state or spatial relation configuration related to the reference RS described above is changed.

The power control parameters for determining the transmission power of the SRS may be changed along with the TCI-state or spatial relation configuration related to the reference RS. Alternatively, the power control parameters for determining the transmission power of the SRS may be changed separately based on a different criterion from the change of the TCI-state or spatial relation configuration related to the reference RS.

As an example, the parameter set related to the power control parameters may be changed based on i) the periodicity related to the transmission of the SRS or ii) the change of the TCI-state or spatial relation configuration related to the reference RS.

The operations based on S510 and S520, the DCI receiving step, and the MAC CE receiving step described above may be implemented by the apparatus of FIG. 7. For example, the UE 200 may control one or more transceivers 230 and/or one or more memories 240 to perform the operations based on S510 and S520, the DCI receiving step, and the MAC CE receiving step.

Hereinafter, the embodiments described above will be specifically described in terms of the operation of the BS.

S610 and S620, a DCI transmitting step, and an MAC CE transmitting step described below correspond to S510 and S520, the DCI receiving step, and the MAC CE receiving step described in FIG. 5. By considering the correspondence relationship, redundant explanations are omitted. That is, a specific description of the BS operation described below may be replaced with the description/example of FIG. 5 corresponding to the operation.

As an example, the description/embodiments of S510 and S520 of FIG. 5 may be additionally applied to the BS operations of S610 and S620 described below. As an example, the description/example of the DCI receiving step described above may be additionally applied to the BS operation according to the DCI transmitting step described below. As an example, the description/example of the MAC CE receiving step described above may be additionally applied to the BS operation according to the MAC CE transmitting step described below.

FIG. 6 is a flowchart for describing a method performed by a BS according to another embodiment of the present disclosure.

In S610, the BS transmits configuration information related to a sounding reference signal (SRS) to the UE.

In S620, the BS receives the SRS from the UE based on the at least one SRS resource set.

The method may further include a DCI transmitting step. In the DCI transmitting step, the BS receives downlink control information (DCI) related to the SRS to the UE. The DCI transmitting step may be performed before S620 or after S620.

The method may further include an MAC CE transmitting step. In the MAC CE transmitting step, the BS transmits a medium access control control element (MAC CE) to the UE. The MAC CE transmitting step may be performed before S620.

The operations based on S610 and S620, the DCI transmitting step, and the MAC CE transmitting step described above may be implemented by the apparatus of FIG. 7. For example, the BS 100 may control one or more transceivers 130 and/or one or more memories 140 to perform the operations based on S610 and S620, the DCI transmitting step, and the MAC CE transmitting step.

A device to which an embodiment of the present disclosure is applicable (a device implementing the method/operation according to an embodiment of the present disclosure) is described below with reference to FIG. 7.

FIG. 7 illustrates configuration of a first device and a second device according to an embodiment of the present disclosure.

A first device 100 may include a processor 110, an antenna unit 120, a transceiver 130, and a memory 140.

The processor 110 may perform baseband-related signal processing and include a higher layer processing unit 111 and a physical layer processing unit 115. The higher layer processing unit 111 may process operations of the MAC layer, the RRC layer, or higher layers. The physical layer processing unit 115 may process the operation of the PHY layer. For example, if the first device 100 is a base station (BS) device in BS-UE communication, the physical layer processing unit 115 may perform uplink reception signal processing, downlink transmission signal processing, and the like. For example, if the first device 100 is a first UE device in inter-UE communication, the physical layer processing unit 115 may performs downlink reception signal processing, uplink transmission signal processing, sidelink transmission signal processing, and the like. The processor 110 may control the overall operation of the first device 100 in addition to performing the baseband-related signal processing.

The antenna unit 120 may include one or more physical antennas and support MIMO transmission/reception if the antenna unit 120 includes a plurality of antennas. The transceiver 130 may include a radio frequency (RF) transmitter and an RF receiver. The memory 140 may store information processed by the processor 110 and software, operating systems, and applications related to the operation of the first device 100. The memory 140 may also include components such as a buffer.

The processor 110 of the first device 100 may be configured to implement the operation of the BS in the BS-UE communication (or the operation of the first UE device in the inter-UE communication) in embodiments described in the present disclosure.

The second device 200 may include a processor 210, an antenna unit 220, a transceiver 230, and a memory 240.

The processor 210 may perform baseband-related signal processing and include a higher layer processing unit 211 and a physical layer processing unit 215. The higher layer processing unit 211 may process the operation of the MAC layer, the RRC layer, or higher layers. The physical layer processing unit 215 may process the operation of the PHY layer. For example, if the second device 200 is a UE device in BS-UE communication, the physical layer processing unit 215 may perform downlink reception signal processing, uplink transmission signal processing, and the like. For example, if the second device 200 is a second UE device in inter-UE communication, the physical layer processing unit 215 may perform downlink reception signal processing, uplink transmission signal processing, sidelink reception signal processing, and the like. The processor 210 may control the overall operation of the second device 200 in addition to performing the baseband-related signal processing.

The antenna unit 220 may include one or more physical antennas and support MIMO transmission/reception if the antenna unit 220 includes a plurality of antennas. The transceiver 230 may include an RF transmitter and an RF receiver. The memory 240 may store information processed by the processor 210 and software, operating systems, and applications related to the operation of the second device 200. The memory 240 may also include components such as a buffer.

The processor 210 of the second device 200 may be configured to implement the operation of the UE in the BS-UE communication (or the operation of the second UE device in the inter-UE communication) in embodiments described in the present disclosure.

The descriptions for the BS and the UE in the BS-UE communication (or the first UE device and the second UE device in the inter-UE communication) in the examples of the present disclosure can be equally applied to the operations of the first device 100 and the second device 200, and redundant descriptions are omitted.

The wireless communication technology implemented in the devices 100 and 200 according to the present disclosure may further include narrowband Internet of Things (NB-IoT) for low-power communication in addition to LTE, NR, and 6G. For example, the NB-IoT technology may be an example of a low power wide area network (LPWAN) technology and may be implemented in standards such as LTE Cat NB1 and/or LTE Cat NB2. The NB-IoT technology is not limited to the above-described names.

Additionally or alternatively, the wireless communication technology implemented in the devices 100 and 200 according to the present disclosure may perform communication based on LTE-M technology. For example, the LTE-M technology may be an example of the LPWAN technology, and may be called by various names such as enhanced machine type communication (eMTC). For example, the LTE-M technology may be implemented with at least one of various standards such as 1) LTE CAT 0, 2) LTE Cat M1, 3) LTE Cat M2, 4) LTE non-BL (non-Bandwidth Limited), 5) LTE-MTC, 6) LTE machine type communication, and/or 7) LTE M. The LTE-M technology is not limited to the above-mentioned names.

Additionally or alternatively, the wireless communication technology implemented in the devices 100 and 200 according to the present disclosure may include at least one of ZigBee, Bluetooth, and low power wide area network (LPWAN) in consideration of low power communication, and is not limited to the above-mentioned names. For example, the ZigBee technology may create personal area networks (PAN) related to small/low-power digital communication based on various standards such as IEEE 802.15.4, and may be called by various names.

**Claims**

1. A method performed by a user equipment in a wireless communication system, the method comprising:

    receiving configuration information related to a sounding reference signal (SRS), wherein the configuration information includes information on at least one SRS resource set; and
    transmitting the SRS based on the at least one SRS resource set,
    wherein the at least one SRS resource set includes one or more SRS resources, and
    wherein each SRS resource is related to one or more TCI-states or one or more spatial relation configurations.

2. The method of claim 1, wherein a reference RS for an uplink transmission (UL Tx) spatial filter related to the SRS is based on i) the one or more TCI-states or ii) the one or more spatial relation configurations.

3. The method of claim 2, wherein a time domain behavior based on a resource type related to the at least one SRS resource set is periodic or semi-persistent.

4. The method of claim 3, wherein the TCI-state or spatial relation configuration related to the reference RS is changed based on a periodicity of each SRS resource.

5. The method of claim 4, wherein the SRS is transmitted in one or more slots based on the periodicity,

    wherein the one or more slots include i) at least one first slot and ii) at least one second slot, and
    wherein the at least one second slot is based on a slot after slots based on the periodicity from the at least one first slot.

6. The method of claim 5, wherein a TCI-state or a spatial relation configuration related to the at least one first slot is different from a TCI-state or a spatial relation configuration related to the at least one second slot.

7. The method of claim 2, further comprising:
    receiving downlink control information (DCI) related to the SRS.

8. The method of claim 7, wherein the time domain behavior based on a resource type related to the at least one SRS resource set is aperiodic.

9. The method of claim 8, wherein a TCI-state or a spatial relation configuration related to the reference RS is changed whenever the SRS is triggered based on the DCI.

10. The method of claim 8, wherein one or more slots for transmitting the SRS are determined based on a slot offset of the at least one SRS resource set, and
    wherein a TCI-state or a spatial relation configuration related to the reference RS is changed based on the one or more slots.

11. The method of claim 10, wherein the TCI-state or the spatial relation configuration related to the reference RS is changed for each slot among the one or more slots, and
    wherein a number of the one or more slots is determined based on a number of the one or more TCI-states or a number of the one or more spatial relation configurations.

12. The method of claim 10, wherein the TCI-state or the spatial relation configuration related to the reference RS is changed based on an index of each slot among the one or more slots, and
    wherein the index of each slot is associated with i) one of the one or more TCI-states or ii) one of the one or more spatial relation configurations.

13. The method of claim 7, wherein the least one SRS resource set includes two SRS resource sets triggered based on the DCI.

14. The method of claim 13, wherein the DCI includes i) a first SRS resource indicator field and ii) a second SRS resource indicator,

wherein a first SRS resource of a first SRS resource set is indicated based on the first resource indicator field, and a second SRS resource of a second SRS resource set is indicated based on the second resource indicator field, wherein the DCI includes a 1 bit field, and

wherein the first resource set and the second resource set corresponding to two SRS resource sets are triggered based on the 1 bit field.

15. The method of claim 14, wherein for the first SRS resource set, the SRS is transmitted based on a TCI-state or a spatial relation configuration configured in the first SRS resource, and

for the second SRS resource set, the SRS is transmitted based on a TCI-state or a spatial relation configuration configured in the second SRS resource.

16. The method of claim 13, wherein the DCI includes an SRS request field,

wherein two SRS resource sets are triggered based on a codepoint of the SRS request field, and

wherein the codepoint is a codepoint to which two SRS resource sets are mapped among codepoints of the SRS request field.

17. The method of claim 16, wherein the DCI includes i) a first SRS resource indicator field and ii) a second SRS resource indicator,

wherein a first SRS resource of a first SRS resource set is indicated based on the first resource indicator field, and a second SRS resource of a second SRS resource set is indicated based on the second resource indicator field, wherein for a 1st SRS resource set mapped to the codepoint, the SRS is transmitted based on the TCI-state or spatial relation configuration configured in the first SRS resource, and

wherein for a 2nd SRS resource set mapped to the codepoint, the SRS is transmitted based on the TCI-state or spatial relation configuration configured in the second SRS resource.

18. The method of claim 16, wherein the DCI includes a transmission configuration indication (TCI) field,

wherein two TCI states are indicated based on the TCI field,

wherein for a 1st SRS resource set mapped to the codepoint, the SRS is transmitted based on a first TCI state, and

wherein for a 2nd SRS resource set mapped to the codepoint, the SRS is transmitted based on a second TCI state.

19. The method of claim 3, further comprising:

receiving a medium access control control element (MAC CE),

wherein the MAC CE includes at least one field related to each SRS resource of the at least one SRS resource set, and

wherein the at least one field is related to i) the one or more TCI-states among candidate TCI-states or ii) the one or more spatial relation configurations among candidate spatial relation configurations.

20. The method of claim 2, wherein based on the reference RS being determined by i) a specific TCI-state among the one or more TCI-states or ii) a specific spatial relation configuration among the one or more spatial relation configurations, the SRS is transmitted based on a second number of symbols and/or a second repetition factor which have larger values than a first number of second symbols and/or a first repetition factor configured in a SRS resource related to the reference RS.

21. The method of claim 1, wherein a usage of the at least one SRS resource set is set to an antenna switching, a codebook, a non-codebook, or a beam management.

22. The method of claim 2, wherein the at least one SRS resource set is related to one or more parameter sets,

wherein a number of the one or more parameter sets is same as a number of the one or more TCI states or ii) a number of the one or more spatial relation configurations, and

wherein power control parameters for determining transmission power of the SRS are based on one of the one or more parameter sets.

23. The method of claim 22, wherein a parameter set related to the power control parameters is changed based on i) a periodicity related to transmission of the SRS or ii) a change of a TCI-state or a spatial relation configuration related to the reference RS.

24. A user equipment operating in a wireless communication system, comprising:

   one or more transceivers;
   one or more processors; and
   one or more memories operably connectable to the one or more processors, and storing instructions of configuring the one or more processors to perform operations when being executed by the one or more processors,
   wherein the operations include
   receiving configuration information related to a sounding reference signal (SRS), wherein the configuration information includes information on at least one SRS resource set; and
   transmitting the SRS based on the at least one SRS resource set,
   wherein the at least one SRS resource set includes one or more SRS resources, and
   wherein each SRS resource is related to one or more TCI-states or one or more spatial relation configurations.

25. An apparatus comprising: one or more memories and one or more processors functionally connected to the one or more memories,

   wherein the one or more memories include instructions of configuring the one or more processors to perform operations when being executed by the one or more processors, and
   wherein the operations include
   receiving configuration information related to a sounding reference signal (SRS), wherein the configuration information includes information on at least one SRS resource set; and
   transmitting the SRS based on the at least one SRS resource set,
   wherein the at least one SRS resource set includes one or more SRS resources, and
   wherein each SRS resource is related to one or more TCI-states or one or more spatial relation configurations.

26. One or more non-transitory computer-readable media storing one or more instructions, wherein one or more constructions executable by one or more processors are configured to allow the one or more processors to perform operations, and

   wherein the operations include
   receiving configuration information related to a sounding reference signal (SRS), wherein the configuration information includes information on at least one SRS resource set; and
   transmitting the SRS based on the at least one SRS resource set,
   wherein the at least one SRS resource set includes one or more SRS resources, and
   wherein each SRS resource is related to one or more TCI-states or one or more spatial relation configurations.

27. A method performed by a base station in a wireless communication system, the method comprising:

   transmitting configuration information related to a sounding reference signal (SRS), wherein the configuration information includes information on at least one SRS resource set; and
   receiving the SRS based on the at least one SRS resource set,
   wherein the at least one SRS resource set includes one or more SRS resources, and
   wherein each SRS resource is related to one or more TCI-states or one or more spatial relation configurations.

28. A base station operating in a wireless communication system, comprising:

   one or more transceivers;
   one or more processors; and
   one or more memories operably connectable to the one or more processors, and storing instructions of configuring the one or more processors to perform operations when being executed by the one or more processors,
   wherein the operations include
   transmitting configuration information related to a sounding reference signal (SRS), wherein the configuration information includes information on at least one SRS resource set; and
receiving the SRS based on the at least one SRS resource set,
wherein the at least one SRS resource set includes one or more SRS resources, and
wherein each SRS resource is related to one or more TCI-states or one or more spatial relation configurations.

【FIG. 1】

【FIG. 2】

TRP 1

Layer group #1
for CW #1

TRP 2

Layer group #2
for CW #1

UE1

(a)

TRP 1

Layer group #1
for CW #1

TRP 2

Layer group #2
for CW #2

UE1

(b)

【FIG. 3】

PDCCH

Slot offset(DCI)=1

Slot offset(DCI)=2

| D | D | U | U | D | D | U | U |

Slot n  Slot n+1  Slot n+2  Slot n+3  Slot n+4  Slot n+5  Slot n+6  Slot n+7

Reference slot
Slot offset(RRC)=2

【FIG. 4】

Partial frequency
index 0

Partial bandwidth

. . .

Partial frequency
index 1

SRS hopping period

【FIG. 5】

```
                    ╭─────────╮
                    │  Start  │
                    ╰────┬────╯
                         │
                         ▼
        ┌────────────────────────────────────┐
        │  Receive configuration information  │──── S510
        └────────────────┬───────────────────┘
                         │
                         ▼
        ┌────────────────────────────────────┐
        │           Transmit SRS              │──── S520
        └────────────────┬───────────────────┘
                         │
                         ▼
                    ╭─────────╮
                    │   End   │
                    ╰─────────╯
```

【FIG. 6】

```
                    ╭─────────╮
                    │  Start  │
                    ╰────┬────╯
                         │
                         ▼
        ┌────────────────────────────────────┐
        │  Transmit configuration information │──── S610
        └────────────────┬───────────────────┘
                         │
                         ▼
        ┌────────────────────────────────────┐
        │            Receive SRS              │──── S620
        └────────────────┬───────────────────┘
                         │
                         ▼
                    ╭─────────╮
                    │   End   │
                    ╰─────────╯
```

【FIG. 7】

## INTERNATIONAL SEARCH REPORT

<table>
<tr><td>International application No.<br><br>**PCT/KR2023/011130**</td></tr>
</table>

### A. CLASSIFICATION OF SUBJECT MATTER

**H04L 5/00**(2006.01)i; **H04L 1/08**(2006.01)i; **H04W 72/04**(2009.01)i; **H04W 72/23**(2023.01)i; **H04L 5/14**(2006.01)i; **H04B 7/0413**(2017.01)i

According to International Patent Classification (IPC) or to both national classification and IPC

### B. FIELDS SEARCHED

Minimum documentation searched (classification system followed by classification symbols)

H04L 5/00(2006.01); H04B 7/06(2006.01); H04B 7/08(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 사운딩 참조 신호(Sounding Reference Signal, SRS), 설정 정보(configuration information), 자원(resource), 전송 설정 지시(Transmission Configuration Indication, TCI), 필드(field), 참조 RS(reference RS)

### C. DOCUMENTS CONSIDERED TO BE RELEVANT

| Category* | Citation of document, with indication, where appropriate, of the relevant passages | Relevant to claim No. |
|---|---|---|
| X | WO 2021-187967 A1 (LG ELECTRONICS INC.) 23 September 2021 (2021-09-23)<br>See paragraphs [0113], [0134], [0158] and [0279]; claims 1, 11 and 18; and figure 6. | 1,21,24-28 |
| Y | | 2-9,13,16,19 |
| A | | 10-12,14-15,<br>17-18,20,22-23 |
| Y | WO 2020-246819 A1 (LG ELECTRONICS INC.) 10 December 2020 (2020-12-10)<br>See paragraph [0217]; and claim 11. | 2-9,13,16,19 |
| Y | WO 2021-206499 A1 (LG ELECTRONICS INC.) 14 October 2021 (2021-10-14)<br>See paragraphs [0292]-[0293] and [0295]. | 8-9,13,16 |
| A | WO 2022-020694 A1 (COMCAST CABLE COMMUNICATIONS, LLC) 27 January 2022.<br>See paragraph [0004]; and claims 1-12. | 1-28 |

☑ Further documents are listed in the continuation of Box C.  ☑ See patent family annex.

| | | |
|---|---|---|
| * | Special categories of cited documents: | |
| "A" | document defining the general state of the art which is not considered to be of particular relevance | |
| "D" | document cited by the applicant in the international application | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **03 November 2023** | **03 November 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

International application No.

**PCT/KR2023/011130**

### C. DOCUMENTS CONSIDERED TO BE RELEVANT

| Category* | Citation of document, with indication, where appropriate, of the relevant passages | Relevant to claim No. |
|---|---|---|
| A | WO 2022-015595 A1 (INTEL CORPORATION) 20 January 2022.<br>See paragraphs [0084]-[0135]; claims 1-16; and figures 3A-6. | 1-28 |

Form PCT/ISA/210 (second sheet) (July 2022)

## INTERNATIONAL SEARCH REPORT
### Information on patent family members

International application No.

**PCT/KR2023/011130**

| Patent document cited in search report | | | Publication date (day/month/year) | Patent family member(s) | | | Publication date (day/month/year) |
|---|---|---|---|---|---|---|---|
| WO | 2021-187967 | A1 | 23 September 2021 | EP | 4123917 | A1 | 25 January 2023 |
| | | | | KR | 10-2022-0144828 | A | 27 October 2022 |
| | | | | KR | 10-2562610 | B1 | 02 August 2023 |
| | | | | US | 2023-0147639 | A1 | 11 May 2023 |
| WO | 2020-246819 | A1 | 10 December 2020 | EP | 3982582 | A1 | 13 April 2022 |
| | | | | KR | 10-2022-0018509 | A | 15 February 2022 |
| | | | | US | 2022-0239440 | A1 | 28 July 2022 |
| WO | 2021-206499 | A1 | 14 October 2021 | KR | 10-2022-0152267 | A | 15 November 2022 |
| | | | | US | 2023-0164702 | A1 | 25 May 2023 |
| WO | 2022-020694 | A1 | 27 January 2022 | CN | 116235417 | A | 06 June 2023 |
| | | | | EP | 4186198 | A1 | 31 May 2023 |
| | | | | JP | 2023-535940 | A | 22 August 2023 |
| | | | | KR | 10-2023-0054382 | A | 24 April 2023 |
| | | | | US | 2022-0030620 | A1 | 27 January 2022 |
| WO | 2022-015595 | A1 | 20 January 2022 | JP | 2023-534349 | A | 09 August 2023 |
| | | | | US | 2023-0164786 | A1 | 25 May 2023 |

Form PCT/ISA/210 (patent family annex) (July 2022)